# EUROPÄISCHE PATENTSCHRIFT

(11) **EP 1 685 024 B1**
(45) Veröffentlichungstag und Bekanntmachung des Hinweises auf die Patenterteilung: **30.05.2007**
(21) Anmeldenummer: 04802734.6
(22) Anmeldetag: 15.11.2004
(51) Int. Cl.: B64C 39/00, B64C 1/22, B64D 1/22, B64C 11/00

(54) **LUFTFAHRZEUG**
AIRCRAFT
AERONEF

(30) Priorität: 16.11.2003 DE 10353624; 26.11.2003 DE 10355843; 16.02.2004 DE 102004007682
(43) Veröffentlichungstag der Anmeldung: 02.08.2006
(73) Patentinhaber: IP2H AG, 3013 Bern (CH)
(72) Erfinder: ARNOLD, Jörg, CH-3013 Bern (CH)
(74) Vertreter: Naumann, Ulrich
(86) Internationale Anmeldenummer: PCT/DE2004/002520
(87) Internationale Veröffentlichungsnummer: WO 2005/049422

(56) Entgegenhaltungen:
- EP-A- 1 394 039
- DE-A1- 10 107 515
- GB-A- 747 172
- US-A- 1 761 053
- US-A- 2 037 377
- US-A- 2 507 657
- US-A- 4 235 399
- US-A- 4 588 148
- US-A- 4 860 975
- US-A- 5 265 827
- US-A- 5 375 795
- US-A- 5 906 336
- US-A- 6 007 021

## Beschreibung

Die vorliegende Erfindung betrifft ein Luftfahrzeug mit einem Rumpf und einer mit dem Rumpf gekoppelten Antriebseinrichtung zur Erzeugung eines definierbaren Auftriebs, wobei die Antriebseinrichtung mehrere Flügelblätter aufweist, wobei die Flügelblätter um einen vorgebbaren Blattwinkel um eine Schwenkachse verschwenkbar und um eine Rotationsachse drehbar gelagert sind, wobei der Blattwinkel zur Erzeugung des Auftriebs während der Drehung veränderbar ist, wobei die jeweiligen Schwenkachsen der Flügelblätter im Wesentlichen parallel zur Rotationsachse angeordnet sind, wobei mehrere Flügelblätter eine um jeweils eine der Rotationsachsen rotierbare Walze bilden und wobei die Antriebseinrichtung mindestens zwei derartige Walzen aufweist.

Luftfahrzeuge der eingangs genannten Art sind aus der Praxis bekannt und existieren in den unterschiedlichsten Ausführungsformen und Größen. Dabei sind insbesondere Hubschrauber oder Helikopter bekannt, bei denen durch den Umlauf von einem oder mehreren Hubschraubern - Rotoren - um eine nahezu senkrechte Achse aerodynamisch eine Kraft - Rotorschub - erzeugt wird, deren senkrechte Komponente den Auftrieb liefert. Durch eine Steuerung der Flügelblätter kann die Richtung des Rotorschubs aus der Senkrechten ausgelenkt werden, wodurch eine Horizontatkomponente auftritt, die als Vortriebskraft dient, die den Hubschrauber oder Helikopter aber auch rückwärts oder seitwärts bewegen kann. Die Flügelblätter sind um einen vorgebbaren Blattwinkel um eine Schwenkachse verschwenkbar. Hierdurch wird eine Anstellwinkelverstellung erzeugt. Bei einem Hubschrauber oder Helikopter sind die Flügelblätter radial zu einer Rotationsachse angeordnet.

Die bekannten Luftfahrzeuge verfügen über einen oder mehrere Rotoren mit je zwei oder mehreren radial angeordneten Rotor- oder Flügelblättern, die mit einem Ende an der Rotationsachse bzw. dem Rotorkopf befestigt sind. Die Flügelblätter der Rotoren überstreichen bei ihrer Rotation eine Kreisfläche, deren Flächennormale parallel bzw. koaxial zu der gemeinsamen Senkrechten auf der Längs- und Querachse der Helikopterflugzelle oder des Rumpfs steht oder nur wenige Grad gegen diese Senkrechte verkippt ist. Aus diesem Konstruktionsprinzip heraus resultieren verschiedene flugstatische und flugdynamische Nachteile der bisher bekannten Hubschrauber oder Helikopter.

Ein Nachteil der bekannten Hubschrauber oder Helikopter besteht im Konkreten darin, dass der Rumpf beim Manövrieren nur Vorwärts-, Rückwärts- oder Seitwärtsbewegungen ausführen kann, die mit Nickbewegungen oder Rollbewegungen des Rumpfs bzw. der Hubschrauberflugzelle gekoppelt sind. Dadurch ist ein Manövrieren des Rumpfs unter Parallelhaltung aller Lageachsen nicht möglich. Beim Manövrieren werden immer mindestens zwei Lageachsen verkippt. Ein Satellit kann im Gegensatz hierzu Bewegungsmanöver durchführen, bei denen alle drei Lageachsen des Satelliten parallel bleiben. Hubschraubern sind solche "Shift-Manöver" nicht möglich.

Ein weiterer Nachteil besteht darin, dass alle Hubschraubertypen über so genannte Überkopf-Tragrotoren verfügen, bei denen die Flügelblätter bzw. der Flügelblattkreis den Rumpf nach vorne und zur Seite weit überragen. Hubschrauber müssen deshalb immer einen ausreichenden Abstand zu Hindernissen einhalten und sie können deshalb nicht an Objekten andocken, um z. B. Personen oder Güter übernehmen zu können. Der Zugang von Personen oder Gütern in den Hubschrauber kann bislang nur von unten in den Rumpf erfolgen. Dies schränkt die Fähigkeit der Hubschrauber für Rettungs- und Bergungsmanöver ein. Bei der Verwendung nur eines Überkopf-Tragrotors entsteht wegen der Reaktivkräfte aufgrund des Luftwiderstands gegen den Rotor ein Drehmoment, das den Hubschrauber permanent um die Hochachse des Rumpfs zu verdrehen sucht und üblicherweise mittels eines zweiten Rotors, beispielsweise eines Heckrotors, kompensiert werden muss. Dieser Heckrotor ist störanfällig und häufig Ursache für Hubschrauberabstürze und Bruchlandungen.

Des Weiteren ist bei den bekannten Hubschraubern problematisch, dass beim Richtungsflug eines Hubschraubers Flügelblätter mit Bewegungen gegen den Luftfahrtstrom und Flügelblätter mit Bewegungen in Richtung des Luftfahrtstroms unterschiedlich durch die Luft angeströmt werden. Dadurch ändert sich die Flugdynamik des Hubschraubers beim Richtungsflug mit der Fluggeschwindigkeit. Speziell werden bei sehr schnellem Vorwärtsflug die Flügelblätter mit Bewegungen gegen den Luftfahrtstrom von ihrer Blattvorderkante her angeströmt. Die Bewegungsgeschwindigkeit von Flügelblättern in der Luft addiert sich aus der Kreisbahngeschwindigkeit des Flügelblatts und der Geschwindigkeit des Luftfahrtstroms. Dies begrenzt die mögliche anwendbare Kombination aus Fahrtgeschwindigkeit und Tragkraft des Hubschraubers und die anwendbare Kombination aus Flügelblattdrehzahl und Fluggeschwindigkeit auf den Bereich, in dem die Flügelblattspitzen noch nicht in den Überschallgeschwindigkeitsbereich gelangen und deshalb noch nicht durch Schockwellen beschädigt werden können.

Flügelblätter mit Bewegung in Richtung des Luftfahrtstroms werden - ausgehend vom Inneren des Rotorkreises - teilweise von der Hinterkante des Flügelblatts her angeströmt. Dies trifft für alle Bereiche der Flügelblätter zu, deren Kreisbahngeschwindigkeitsanteil in Richtung des Luftfahrtstroms kleiner ist als die Strömungsgeschwindigkeit des Luftfahrtstroms. Diese Flügelblätter tragen mit zunehmender Fluggeschwindigkeit immer weniger zum Auftrieb des Hubschraubers bei und erzeugen ein fluggeschwindigkeitsabhängiges Rollmoment auf die Hubschrauberflugzelle bzw. auf den Rumpf, welchem entgegengesteuert werden muss.

Diese Problematik führt zur Begrenzung der anwendbaren Höchstgeschwindigkeit von Hubschraubern auf heute typischerweise 400 km/h und zu einem mit steigender Fluggeschwindigkeit zunehmenden Energieaufwand, der nicht der Fluggeschwindigkeit oder der Tragkraft des Hubschraubers zu Gute kommt. Heutige Hubschrauber sind deshalb bezüglich ihrer Flugleistung sehr energieineffizient und erreichen deshalb nur Flugreichweiten von typischerweise 1000 km.

Die Steuerung eines Hubschraubers erfolgt über die Verstellung der Flügelblattanstellwinkel und bei manchen experimentellen Hubschraubern zusätzlich über die Verkippung der Rotorachse bzw. Rotationsachse. Da die Flügelblätter sowohl zyklisch als auch kollektiv verstellt werden müssen, ist in nachteiliger Weise eine aufwendige Taumelscheibensteuerung und eine komplizierte Rotorkopfkonstruktion erforderlich. Diese komplizierte Konstruktion erlaubt heutzutage nur die Auslegung von Rotorköpfen mit nicht mehr als 8 Flügelblättern und Tragfähigkeiten der Rotorköpfe von bis zu 60 t.

Übliche Hubschrauber sind im Prinzip Pendel, bei denen der Rumpf unter dem Rotorkopf als Aufhängungspunkt pendelt. Die Fluglage des Rumpfs ist hier abhängig vom dynamischen Flugzustand, z. B. Vorwärts-, Rückwärts-, Seitwärts- oder Schwebeflug. Es kann keine vom dynamischen Flugzustand unabhängige Fluglage des Rumpfs eingestellt werden, beispielsweise ist einem Hubschrauber kein Messerflug möglich. Es sind allerdings Versuche bekannt, bei denen mit neigbaren oder verkippbaren Rotorköpfen experimentiert wird. Diese ergeben aber noch anfälligere und kompliziertere Antriebskonstruktionen.

Aus der US-A-6,007,021 ist ein Luftfahrzeug mit allen Merkmalen des Oberbegriffs des Patentanspruchs 1 bekannt. Insbesondere weist das bekannte Luftfahrzeug einen Rumpf und eine mit dem Rumpf gekoppelte Antriebseinrichtung zur Erzeugung eines definierbaren Auftriebs auf, wobei die Antriebseinrichtung mehrere Flügelblätter aufweist, die um einen vorgebbaren Blattwinkel um eine Schwenkachse verschwenkbar und um eine Rotationsachse drehbar gelagert sind. Der Blattwinkel ist zur Erzeugung des Auftriebs während der Drehung veränderbar. Die jeweiligen Schwenkachsen der Flügelblätter sind im Wesentlichen parallel zur Rotationsachse angeordnet. Mehrere Flügelblätter bilden eine um jeweils eine der Rotationsachsen rotierbare Walze. Die Antriebseinrichtung weist mindestens zwei derartige Walzen auf.

Der vorliegenden Erfindung liegt nunmehr die Aufgabe zugrunde, ein Luftfahrzeug anzugeben, bei dem mindestens eines der obigen Probleme beseitigt ist und eine einfache Konstruktion realisiert ist.

Erfindungsgemäß ist die voranstehende Aufgabe durch ein Luftfahrzeug mit den Merkmalen des Patentanspruchs 1 gelöst. Danach ist das Luftfahrzeug derart ausgestaltet und weitergebildet, dass sowohl vor als auch hinter einer Rotorwalze jeweils ein Verstellpropeller oder Propeller angeordnet ist.

Im Konkreten könnten die jeweiligen Schwenkachsen der Flügelblätter im Wesentlichen äquidistant zueinander angeordnet sein. Hierdurch ist ein besonders gleichmäßiger und unwuchtfreier Bewegungsablauf der Flügelblätter um die Rotationsachse ermöglicht. Im gleichen Sinn könnten die Schwenkachsen der Flügelblätter jeweils im Wesentlichen im gleichen Abstand zur Rotationsachse angeordnet sein.

Im Konkreten könnten die Schwenkachsen der Flügelblätter nicht nur im Wesentlichen parallel zur Rotationsachse sondern auch im Wesentlichen parallel zueinander angeordnet sein. Hierdurch ist insgesamt eine besonders homogene und quasi symmetrische Ausgestaltung der Anordnung aus Flügelblättern um die Rotationsachse realisierbar.

Im Hinblick auf eine besonders einfache und sichere Einstellung des Blattwinkels der Flügelblätter könnten die Schwenkachsen der Flügelblätter durch den Schwerpunkt der Flügelblätter verlaufend angeordnet sein. Dabei könnte die Schwenkachse genau durch den Flächenschwerpunkt des Flügelblattquerschnittsprofils verlaufen.

Im Hinblick auf die Realisierung einer Neutralstellung der Flügelblätter hinsichtlich ihrer Verschwenkung um die Schwenkachse, d. h. zur Erzeugung einer Stellung, bei der die Flügelblätter während ihres Drehens um die Rotationsachse keinen Schub und keine Luftablenkung erzeugen, könnte das Querschnittsprofil der Flügelblätter zur Rotationsachse hin konkav gekrümmt sein. Das Querschnittsprofil der Flügelblätter könnte dabei quasi vollständig in einer Zylinderwand eines gedachten Kreiszylinders liegen. Ein derartiger, sich drehender Kreiszylinder würde keinen Schub und keine Luftablenkung erzeugen.

Die Schwenkachse eines jeden Flügelblatts könnte aus dem Flügelblattquerschnittsprofil senkrecht herausragen und damit quasi parallel oder koaxial zur Flügelblattlängsachse verlaufen.

Im Hinblick auf eine sichere Steuerung der Flügelblätter und ein sicheres Verschwenken der Flügelblätter um die Schwenkachse könnten die Flügelblätter an mindestens einem Ende jeweils eine Steuerachse als Angriffspunkt für ein Verschwenken der Flügelblätter um die Schwenkachse aufweisen. Diese Steuerachse könnte senkrecht aus dem Flügelblattquerschnittsprofil herausragen und - in Drehrichtung des Flügelblatts um die Rotationsachse gesehen - vor oder hinter der Schwenkachse angeordnet sein. Über die Steuerachse könnte das Flügelblatt ausgelenkt bzw. der Flügelblattanstellwinkel oder Blattwinkel eingestellt werden. Es könnten sowohl positive als auch negative Blattwinkel - bezogen auf die Neutralstellung des Flügelblatts - eingestellt werden. Wie bereits erwähnt, bedeutet die Neutralstellung des Flügelblatts, dass in dieser Stellung bei um die Rotationsachse rotierenden Flügelblättern keine stehende Luft von den Flügelblättern abgelenkt wird, sondern lediglich geschnitten wird. Der Abstand der Steuerachse zur Schwenkachse bestimmt dabei das Übersetzungsverhältnis beim Ansteuern des Blattwinkels.

Im Hinblick auf eine besonders sichere Lagerung und einen besonders sicheren Antrieb der Flügelblätter könnten die Flügelblätter an einem Ende an oder in einem Antriebselement schwenkbar gelagert sein. Dabei könnte das Antriebselement in konstruktiv einfacher Weise um die Rotationsachse drehbar sein oder auf der Rotationsachse drehbar gelagert sein. Hierzu könnte das Antriebselement eine Lagerachse oder Hohlachse aufweisen, die zu einer den Flügelblättern abgewandten Seite orientiert sein könnte.

In konstruktiv besonders einfacher Weise könnte das Antriebselement als Antriebsscheibe, Antriebskreisscheibe oder Antriebsring ausgebildet sein, auf der oder auf dem die Flügelblätter drehbar gelagert sind.

Die Schwenkachsen oder Flügelblätter könnten senkrecht zu dem Antriebselement, der Antriebsscheibe, der Antriebskreisscheibe oder dem Antriebsring angeordnet sein. Dabei könnten die Flügelblätter oder Schwenkachsen auf der der Lagerachse entgegengesetzten Seite angeordnet sein. Des Weiteren könnten die Schwenkachsen kreisförmig am Rand des Antriebselements oder der Antriebsscheibe oder der Antriebskreisscheibe oder am Rand des Antriebsrings angeordnet sein. Hierbei ist eine Anordnung der Schwenkachsen in gleichen Abständen zueinander bevorzugt. Dabei könnte die Anordnung von parallelen Flügelblättern eine kreiszylindrische Rotorwalze bilden.

Grundsätzlich können je nach Durchmesser des Antriebselements und der Breite der Flügelblätter beliebig viele Flügelblätter am Antriebselement oder an der Rotorwalze angeordnet werden. Das Flügelblatt könnte mit seiner Schwenkachse senkrecht in dem Antriebselement angeordnet sein und um diese Schwenkachse drehbar gelagert sein.

Die Lagerachse oder Hohlachse des Antriebselements könnte senkrecht auf dem Antriebselement oder der Fläche der Antriebsscheibe bzw. Antriebskreisscheibe stehen. Hinsichtlich eines sicheren Antriebs des Antriebselements könnte das Antriebselement mit einem Zahnriemen, einer Kette oder einem Zahnradgetriebe gekoppelt sein. Hierzu könnte das Antriebselement einen Zahnkranz auf einem Kreisumfang oder einem Kreisrand des Antriebselements oder auf dem Umfang der Lagerachse aufweisen. Hierdurch könnte die Lagerachse als Antriebswelle ausgebildet sein.

Zur sicheren Kopplung mit den Flügelblättern könnte das Antriebselement Vertiefungen oder Durchgänge zur Lagerung der Schwenkachsen der Flügelblätter aufweisen. Alternativ oder zusätzlich hierzu könnte das Antriebselement Vertiefungen oder Durchgänge für die Steuerachsen der Flügelblätter aufweisen. Die Steuerachsen könnten dabei derart dimensioniert sein, dass sie durch die Vertiefungen oder Durchgänge im Antriebselement hindurchragen. Die Vertiefungen oder Durchgänge könnten als Ausbrüche, Durchbrüche, Löcher oder Schlitze in dem Antriebselement ausgebildet sein. Insbesondere könnten die Vertiefungen oder Durchgänge für die Steuerachsen der Flügelblätter als vorzugsweise gekrümmte Langlöcher ausgebildet sein.

Im Hinblick auf eine Gewichtsersparnis könnte das Antriebselement Vertiefungen, Ausnehmungen, Durchgänge, Ausbrüche, Durchbrüche, Löcher oder Schlitze aufweisen, so dass das Antriebselement ein sternförmiges, ringförmiges oder speichenartiges Aussehen aufweisen könnte.

Hinsichtlich eines sicheren Einstellens des Blattwinkels der Flügelblätter könnte das Antriebselement zum Verschwenken der Flügelblätter um ihre Schwenkachse mit einem Steuerelement zusammenwirken. Das Steuerelement könnte dabei ausschließlich für die Einstellung des Blattwinkels mittels Bewegung der Steuerachsen verantwortlich sein. Hierbei könnte das Steuerelement von der Drehung der Flügelblätter und/oder des Antriebselements entkoppelt sein. Mit anderen Worten dreht das Steuerelement beim Drehen der Flügelblätter um die Rotationsachse nicht mit. In konstruktiv besonders einfacher Weise könnte das Steuerelement auf der Rotationsachse gelagert sein.

Hinsichtlich einer sicheren Steuerung der Schwenkachsen könnte das Steuerelement eine Zykloidsteuerung aufweisen. Grundsätzlich könnte das Steuerelement relativ zur Rotationsachse in einer Führung verschiebbar sein, um eine sichere Einstellung oder Vorgabe des Blattwinkels zu erreichen. Hierzu könnte das Steuerelement so gelagert bzw. geführt sein, dass es eine bestimmte Strecke oder Auslenkung in alle Richtungen senkrecht zur Rotationsachse verschoben werden kann.

Bei einer besonders einfachen Ausgestaltung könnte die Führung zwei senkrecht zueinander angeordnete Linearführungen im Sinne einer Kreuztischführung aufweisen. Alternativ hierzu könnte die Führung in ebenfalls konstruktiv einfacher Weise eine Drehführung in Verbindung mit einer Linearführung im Sinne einer verlängerbaren Drehhebelführung aufweisen.

Als weiter bevorzugte Ausgestaltung könnte die Führung zwei Drehführungen im Sinne einer doppelten Exzenterscheibenführung aufweisen. Die oben genannten Elemente der Führung könnten als Steuerschieber bezeichnet werden. Die Exzenterscheibenführung weist den Vorteil auf, dass sie direkt auf der Lagerachse oder Hohlachse des Antriebselements angeordnet sein kann oder von dieser gestützt werden kann.

Im Hinblick auf eine voneinander unabhängige und sichere Steuerung oder Bewegung der Exzenterscheiben der Exzenterscheibenführung könnte jeder Exzenterscheibe jeweils ein Stellmotor zugeordnet sein. Dabei könnte insbesondere zwei Exzenterscheiben der Exzenterscheibenführung jeweils ein Stellmotor zugeordnet sein.

Eine Exzenterscheibenführung könnte zwei Exzenterscheiben aufweisen, und zwar eine innere Exzenterscheibe, die mit ihrer Exzenterbohrung kugelgelagert auf der Lagerachse des Antriebselements angeordnet sein könnte, und eine äußere Exzenterscheibe, die kugelgelagert um oder auf der inneren Exzenterscheibe angeordnet sein könnte. Dabei könnte die Exzenterbohrung der äußeren Exzenterscheibe die innere Exzenterscheibe aufnehmen. Auf der äußeren Exzenterscheibe könnte das Steuerelement kugelgelagert und/oder zentriert angeordnet sein oder laufen. Beide Exzenterscheiben können sich dabei frei umeinander bzw. ineinander drehen. Falls die Exzenterscheiben gegeneinander verdreht werden, wird das Steuerelement ausgelenkt. Die Exzentrizitäten der Exzenterscheiben sind derart gewählt, dass für eine relative Winkellage der Exzenterscheiben zueinander der Drehpunkt der äußeren Exzenterscheibe mit dem Drehpunkt der Lagerachse des Antriebselements übereinstimmt. Falls sich die Exzenterscheiben in dieser relativen Winkellage zueinander ruhend um die Lagerachse des Antriebselements drehen, bleibt die Lage des Steuerelements unverändert und unausgelenkt.

Mit der Exzenterscheibenführung kann wie folgt gesteuert werden. Ausgehend von der gegenseitigen Winkellage der Exzenterscheiben, bei der keine Auslenkung des Steuerelements vorliegt, werden beide Exzenterscheiben relativ zueinander ruhend um den Winkel verdreht, bei dem die gewünschte Auslenkungsrichtung liegt. Anschließend werden beide Exzenterscheiben so gegeneinander verdreht, dass die äußere Exzenterscheibe um die doppelte Winkelbetragsdrehung der inneren Exzenterscheibe doppelt so schnell entgegengedreht wird. Dabei entsteht eine zum Exzenterscheibendrehwinkel - Auslenkungsbetragwinkel - proportionale Auslenkung des Steuerelements in der gewünschten Auslenkungsrichtung. Diese doppelte Exzenterscheibensteuerung ist also eine Vektorsteuerung, bei der zuerst die Auslenkungsrichtung oder der Auslenkungsrichtungswinkel und danach der Auslenkungsbetrag oder der Auslenkungsbetragwinkel eingestellt wird. Jedem Steuerbefehl bzw. der zugeordneten Steuerposition -"Steuerknüppelstellung" - könnte eine Auslenkung bzw. ein Auslenkungsrichtungswinkel und ein Auslenkungsbetragwinkel zugeordnet sein.

Die Steuerung könnte nun derart stattfinden, dass das Steuern in aufeinander folgende diskrete Steuerpositionen zerlegt wird. Von einer Steuerposition wird sukzessiv in die Folgende übergegangen, indem der zugeordnete Auslenkungsrichtungswinkel in den folgenden zugeordneten Auslenkungsrichtungswinkel und der zugeordnete Auslenkungsbetragwinkel in den folgenden zugeordneten Auslenkungsbetragwinkel überführt wird. Je feiner die diskrete Zerlegung gewählt wird, umso feiner, bzw. simultaner ist das Steuern möglich. Die Exzenterscheiben könnten dabei durch zwei Stellmotoren, beispielsweise zwei Schrittmotoren, verstellt werden. Ein Stellmotor hält und verdreht dabei die innere Exzenterscheibe und ein Stellmotor hält und verdreht dabei die äußere Exzenterscheibe. Hierzu könnte jede Exzenterscheibe mit einem Zahnkranz versehen sein, in den der Stellmotor über ein Ritzel eingreifen könnte. Die Exzenterscheiben stehen bei rotierenden Flügelblättern außerhalb des Steuervorgangs still.

Im Hinblick auf eine besonders sichere Lagerung und/oder Führung der Steuerachsen könnte das Steuerelement eine Ringnut oder Kreisnut zur Aufnahme der Steuerachsen der Flügelblätter aufweisen. Während des Drehens der Flügelblätter um die Rotationsachse könnten die Steuerachsen in der Ringnut oder Kreisnut umlaufen. In weiter konstruktiv einfacher Weise könnte das Steuerelement als Steuerring oder Steuerscheibe ausgebildet sein. Dabei könnte eine Ringnut oder Kreisnut im äußeren Bereich des Steuerrings oder der Steuerscheibe ausgebildet sein.

Wird nun das Steuerelement bei rotierendem Antriebselement über die Führung des Steuerelements in eine Richtung ausgelenkt, so folgen die Steuerachsen der Flügelblätter, die in einer Ringnut oder Kreisnut umlaufen könnten, zyklisch dieser Auslenkung. Dies realisiert eine zyklische Flügelblattverstellung. Bei einem Umlauf werden die Steuerachsen der Flügelblätter aus ihrer Neutralstellung sowohl einmal positiv maximal als auch einmal negativ maximal ausgelenkt und durchlaufen zwischen diesen beiden Extremalauslenkungen zweimal ihre Neutralstellung. In den beiden auf einer Ringnutbahn des Steuerelements gegenüberliegenden Neutralstellungen wird die ruhende Luft von den Flügelblättern nicht abgelenkt. In den beiden Extremalstellungen wird die stehende Luft wegen der Bewegungsrichtungsumkehr der Flügelblätter auf ihrer Kreisbahn in diesen Punkten in die gleiche Richtung maximal abgelenkt.

Die Extremalstellungen der Flügelblätter liegen auf Positionen auf der Verschiebungsachse oder in der Auslenkungsrichtung des Steuerelements. Die Neutralstellungen liegen an Positionen vor, die hierzu um jeweils 90 Grad verschoben sind. Falls die Steuerachsen der Flügelblätter - in Drehrichtung der Flügelblätter gesehen - vor den Schwenkachsen der Flügelblätter am Flügelblatt angeordnet sind, so ist die Verschiebungsrichtung des Steuerelements identisch mit der Schubrichtung, die durch die Luftablenkung vorgegeben wird. Falls die Steuerachsen der Flügelblätter hinter den Schwenkachsen angeordnet sind, so ergibt sich die umgekehrte Wirkung.

Zur Steigerung der Effizienz der Antriebseinrichtung könnte die Ringnut oder der Steuerring eine von der Kreisform abweichende Gestaltung aufweisen. Es ist also nicht zwangsläufig eine kreisförmige Ausgestaltung der Ringnut oder des Steuerrings vorgesehen. Im Konkreten könnte die abweichende Gestaltung eine drehwinkelabhängige Anstellwinkelfunktion oder überlagerte Anstellwinkelfunktionen liefern.

Die Effizienz der Antriebseinrichtung ist hierdurch variierbar. Weiter im Konkreten könnte die Anstellwinkelfunktion dem Ausdruck a·cos(x)^{w} proportional sein, wobei a der Anstellwinkel der Flügelblätter in Grad ist und w vorzugsweise eine ganze Zahl - vorzugsweise 11 - ist.

Mit anderen Worten könnte die Form des Steuerrings oder der Ringnut weiter optimiert werden, um die Effizienz der um eine Rotationsachse drehbaren Flügelblätter oder die Effizienz einer Rotorwalze zu steigern. Zur Bereitstellung dieses Effekts könnte anstelle einer kreisförmigen Ringnut oder anstelle eines kreisförmigen Steuerrings eine abweichende Form realisiert werden, die eine drehwinkelabhängige Anstellwinkelfunktion a·cos(x)^{w} liefert. Dies ist nur ein Demonstrationsbeispiel für die Optimierungsfähigkeit der Effizienz der um eine Rotationsachse drehbaren Flügelblätter oder der Rotorwalze. In der Realität eignen sich Ringnutformen besser, die überlagerte Anstellwinkelfunktionen liefern, da dann die Rotorwalzeneffizienz oder Effizienz der um eine Rotationsachse drehbaren Flügelblätter nicht auf Kosten des maximalen Rotorwalzen- oder Flügelblätterschubs optimiert werden kann.

Solche Ringnutformen oder Steuerringformen oder Flügelblattbahnkurven lassen sich aus der Überlagerung eines Kreises - Basiskreis - mit zwei oder vier periodischen und symmetrischen "Ausbuchtungen" auf dem Kreis erzeugen, so dass den Kurven der möglichen Überlagerungsfunküonen der Basiskreis einbeschrieben werden kann und ein Quadrat umschrieben werden kann. Es liegt dann also eine ganze Schar von Kurven vor. Im Grenzfall wäre eine Annäherung eines Quadrates um den Kreis denkbar.

Einfache Beispiele solcher Überlagerungskurven sind für zwei Ausbuchtungen Ellipsen und für vier Ausbuchtungen Epizykloiden und Astroiden oder einfache Quadrate oder Rechtecke mit gerundeten Ecken. Im Falle der Verwendung nicht kreisförmiger Steuerringe oder Ringnuten mit einer starken Abweichung zur Kreisform ist die Steuerung der Flügelblätter oder der Rotorwalze abzuwandeln. Es könnten dann je zwei nebeneinander oder hintereinander liegende Steuerelemente oder Nutenringe mit gleicher oder wenig voneinander abweichender Nutenringform an einem Ende der Rotorwalze oder an den beiden Enden der Rotorwalze verwendet werden. In dem einen Nutenring, der neben der Antriebsscheibe und/oder neben der Führungsscheibe liegt und relativ zu ihr festliegt, laufen die Flügelblattschwenkachsen - Flügelblattdrehachsen - um und im anderen Nutenring - dem Steuerring - laufen die Flügelblattsteuerachsen oder Flügelblattanlenkachsen um. Dieser Nutenring kann nach wie vor relativ zur Antriebsscheibe oder Führungsscheibe verdreht und verschoben werden.

Die Antriebsscheibe und die Führungsscheibe sind zusätzlich anstelle mit Bohrungen für die Flügelblattschwenkachsenaufnahme mit radialen Schlitzen oder Langlöchern versehen, in denen die Flügelblattschwenkachsen radial gleiten können. Die Antriebsscheibe und die Führungsscheibe haben dann den Charakter einer Mitnehmerscheibe. In dieser konstruktiven Ausführung mit paarweisen Steuerelementen bzw. Nutenringen könnten sowohl die Flügelblattschwenkachsen als auch die Flügelblattsteuerachsen radial geführt und bewegt werden. Es liegt dann anstelle einer kreiszylindrischen Rotorwalze oder Anordnung von Flügelblättern eine zylindrische Rotorwalze mit beispielsweise ellipsoider, epizyklischer oder asteroider oder eckengerundet quadratischer oder eckengerundet rechteckiger Querschnittsbahn vor, auf der sich die Flügelblätter bewegen können.

Bei einer konstruktiv einfachen Ausgestaltung könnte die Lagerachse oder Hohlachse des Antriebselements vorzugsweise zentrisch durch das Steuerelement hindurch verlaufend angeordnet sein. Dabei könnte das Steuerelement konzentrisch hinter oder unter dem Antriebselement angeordnet sein. Dabei könnte die Lagerachse des Antriebselements, die gleichzeitig Antriebswelle sein kann, durch das Steuerelement hindurchgeführt sein. Das Antriebselement und das Steuerelement könnten hierbei parallel zueinander angeordnet sein. Bei einer Ausgestaltung des Antriebselements als Antriebsscheibe und des Steuerelements als Steuerring könnte die Antriebsscheibenkreisfläche parallel oder koplaner zur Fläche angeordnet sein, in der der Steuerring liegt.

Die Enden der Steuerachsen der Flügelblätter könnten bei Drehung der Antriebsscheibe spielfrei in der Ringnut oder Kreisnut des Steuerelements laufen. Dabei sind die Steuerachsen durch das Antriebselement oder die Antriebsscheibe hindurch gesteckt. Die Spielfreiheit könnte z. B. durch eine entsprechende Rollenlagerung erreicht werden, in der die Enden der Steuerachsen sitzen. Im einfachsten Fall könnte diese Rollenlagerung mittels zweier radial leicht versetzter Wälzlager realisiert werden, die auf dem Ende der Steuerachse sitzen. Das eine Wälzlager hält dabei lediglich einen Druckkontakt zur einen Ringnutinnenwand und das andere. Wälzlager hält lediglich einen Druckkontakt zur anderen oder gegenüberliegenden Ringnutinnenwand.

Die zyklische Verstellung der Flügelblätter könnte alternativ mittels den aus der marinen Antriebstechnik bekannten Zykloidsteuerungen für Paddelantriebe realisiert werden, wie sie beispielsweise im Schneider-Voith-Antrieb vorliegen. Diese bekannten Konstruktionsprinzipien eignen sich allerdings weniger für schnell rotierende Rotorwalzen, da die Paddelansteuerungsmechanik über hohe bewegte Massen verfügt, deren zyklische Beschleunigung zu hohen Reaktionskräften und Vibrationen führt. Die Erfindung hingegen gewährleistet minimale Massenbeschleunigungen, da lediglich die Flügelblätter zyklisch um ihre Längsachse und keine weiteren Steuermechanismus-Massen zyklisch beschleunigt werden müssen.

Im Hinblick auf ein besonders stabiles Flugverhalten könnte die Antriebseinrichtung mindestens zwei Anordnungen aus um jeweils eine Rotationsachse drehbaren Flügelblättern aufweisen. Hierdurch lassen sich unerwünschte Drehmomente um die Hochachse des Luftfahrzeugs vermeiden.

Zur Realisierung eines sicheren Auftriebs könnte die Rotationsachse oder könnten die Rotationsachsen in einer im Wesentlichen horizontalen Ebene angeordnet sein. Hierdurch ist eine maximale Schubumsetzung in vertikaler Richtung ermöglicht.

Im Hinblick auf einen besonders schmalen Aufbau des Luftfahrzeugs könnte die Rotationsachse oder könnten die Rotationsachsen parallel zu einer in Vorwärts-Flugrichtung verlaufenden Längsachse des Rumpfs angeordnet sein.

Zur Erzeugung stabiler Fluglagen könnten die Walzen in Richtung der Längsachse gegeneinander versetzt sein. Auf jeder Längsseite des Rumpfs könnte mindestens eine derartige Walze angeordnet sein. Es sind jedoch auch mehrere Walzen auf jeder Längsseite des Rumpfs denkbar. Bei einer Ausgestaltung mit mehreren Walzen lässt sich ein stärkerer Auftrieb erzeugen, wodurch höhere Lasten durch das Luftfahrzeug transportierbar wären.

Zur Vermeidung unerwünschter Drehmomente könnten zumindest zwei Walzen gegensinnig drehbar sein.

Bei einer konkreten und konstruktiv einfachen Ausgestaltung könnten auf jeder Längsseite des Rumpfs mindestens zwei Walzen angeordnet sein und könnten die Rotationsachsen sich gegenüberliegender Walzen fluchten. Damit ist letztendlich eine Anordnung der Walzen mit Rotationsachsen realisiert, die senkrecht zu einer in Vorwärts-Flugrichtung verlaufenden Längsachse des Rumpfs angeordnet sind.

Im Hinblick auf eine besonders vielseitige und individuelle Steuerung des Luftfahrzeugs könnte jede Walze separat steuerbar sein. Bei einer vereinfachten Steuerung könnten mehrere Walzen zusammen im gleichen Sinn steuerbar sein.

Aufgrund des Wirkprinzips einer Walze aus um eine Rotationsachse rotierbaren Flügelblättern liegt die Auftriebs- bzw, Vortriebserzeugung senkrecht zur Walzenlängsachse bzw, Rotationsachse. Die Walzen als Antriebe bzw. ihre Rotationsachsen könnten deshalb parallel bzw. koaxial zur Querachse des Luftfahrzeugs am Rumpf angeordnet werden. Es sollten aber mindestens zwei in Längsachsenrichtung des Rumpfs gegeneinander versetzte Walzen - je eine auf jeder Seite des Rumpfs - verwendet werden, um ein hinsichtlich der Fluglage statisch bestimmtes und besonders stabiles System zu erreichen. Zur Vermeidung unerwünschter Drehmomente könnten die beiden Rotorwalzen gegensinnig rotieren. Die Anwendung von zwei Walzen auf der gleichen Höhe der Längsachse könnte im Schwerpunkt des Luftfahrzeugs liegen und würde je nach dem, ob die Rotorwalzen sich gleichsinnig oder gegensinnig drehen, ein Drehmoment um die Querachse oder um die Hochachse des Rumpfs erzeugen. Die notwendige statische Fluglagenstabilität wäre hier nicht gegeben.

Unter Berücksichtigung der Möglichkeit eines Ausfalls einer Rotorwalze könnte eine besonders sichere Ausgestaltung der Erfindung die Verwendung von vier Rotorwalzen aufweisen, wobei sich je zwei Rotorwalzen auf beiden Seiten des Rumpfs gegenüberliegen bzw. eine gemeinsame Rotorwalzenlängsachse bzw. Rotationsachse bilden. Je ein solches Rotorwalzenpaar könnte im vorderen Bereich und im hinteren Bereich des Rumpfs vorgesehen werden.

Durch die Verwendung von zwei bzw, vier in Längsachsertrichtung des Rumpfs versetzte Rotorwalzen kann das Luftfahrzeug Vorwärts- und Rückwärtsmanöver durchführen, ohne zu nicken. Dazu müssten die vordere und die hintere Rotorwalze bzw. das vordere oder hintere Rotorwalzenpaar lediglich hinsichtlich ihrer Schuberzeugung gleich gesteuert werden. Andererseits könnte ein Vorwärts- und Rückwärtsmanöver durch eine unterschiedlich starke Schuberzeugung des vorderen und des hinteren Antriebs durchgeführt werden. Dies führt dann wieder zu einem Drehmoment um die Querachse des Rumpfs und damit zur bekannten Nickbewegung, bei der in der Kräfteparallelogrammzerlegung der Schubvektoren eine Komponente in Vorwärts- oder Rückwärtsrichtung erzeugt wird.

Für Seitwärtsmanöver der Erfindung kann gleiches wie zu Vorwärts- und Rückwärtsmanövem gesagt werden. Seitwärtsmanöver könnten durch eine unterschiedliche Schubsteuerung der linken oder der rechten Rotorwalzen bzw. des linken oder des rechten Antriebs durchgeführt werden. Dadurch entsteht ein Drehmoment um die Längsachse des Rumpfs und durch die folgende Rollbewegung resultieren wieder Schubvektoren in Seitwärisrichtung.

Durch eine weitere Ausgestaltung des erfindungsgemäßen Luftfahrzeugs könnte jedoch auch eine Seitwärtsbewegung ohne eine resultierende Rollbewegung erzeugt werden. Hierzu könnten die Flügelblätter an ihrem anderen, dem Antriebselement abgewandten Ende an oder in einem Führungselement mittels jeweils einer Schwenkachse schwenkbar gelagert sein. Ein derartiges Führungselement kann Biegemomente der rotierenden Flügelblätter aufnehmen, die durch die zyklische Luftablenkung und die Zentrifugalkräfte der Rotation auftreten. Mit dem Führungselement kann die Anordnung aus Flügelblättern oder die Rotorwalze mit wesentlich höheren Drehzahlen rotieren und sie kann wesentlich mehr Schubreaktionskräfte aufnehmen bzw. wesentlich mehr Vortriebsschub und Auftriebsschub erzeugen.

Das Führungselement könnte im Wesentlichen wie das Antriebselement - vorzugsweise scheibenförmig - ausgebildet sein. Hierbei könnte ein Führungselement als Führungsscheibe ausgebildet werden.

Das Führungselement könnte durch eine zentrische Unterstützungsachse oder eine Hohlachse zwischen dem Antriebselement und dem Führungselement unterstützt und an das Antriebselement angekoppelt werden. Das Führungselement könnte folglich mit dem Antriebselement mitdrehbar angeordnet sein. Im Konkreten könnte das Führungselement und das Antriebselement mittels einer Achse oder der Rotationsachse gekoppelt sein. Dabei könnte die Längsachse der Unterstützungsachse, Hohlachse, Achse oder Rotationsachse durch das Zentrum des Antriebselements und des Führungselements verlaufen, wobei die Längsachse der Unterstützungsachse oder Hohlachse mit der Rotorwalzenlängsachse bzw. der Rotationsachse zusammenfällt.

Die Unterstützungsachse des Führungselements oder der Führungsscheibe entspricht der Lagerachse des Antriebselements oder der Antriebsscheibe. Dabei kann man die Unterstützungsachse als führungselementseitige Verlängerung der Lagerachse des Antriebselements ansehen. Da die Unterstützungsachse oder Hohlachse das Führungselement mitnimmt bzw. antreibt, könnte sie gleichzeitig Antriebswelle für das Führungselement sein.
Im Hinblick auf eine besonders einfache Seitwärtsbewegung des Luftfahrzeugs ohne eine resultierende Rollbewegung könnte dem Führungselement ein Führungsrotor aus mehreren Rotorblättern zugeordnet sein. Die Rotorblätter könnten in konstruktiv besonders einfacher Weise an dem Führungselement angelenkt sein. Die Rotorblätter könnten im Konkreten zwischen der Nabe des Führungselements und dem Rand des Führungselements radial angeordnet sein. Hierzu könnte das Führungselement entsprechende Durchgänge und/oder Lagersitze aufweisen. Ein derartiger Führungsrotor könnte dem Heckrotor herkömmlicher Hubschrauber entsprechen und im Prinzip konstruktionsgleich sein.

Der Führungsrotor könnte über ein durch die Rotationsachse verlaufendes Gestänge angetrieben sein. Ein derartiges Gestänge könnte eine Schubstange aufweisen, die durch die Unterstützungsachse und die Lagerachse des Antriebselements geführt ist. Der Führungsrotor könnte durch die Schubstange und durch Umlenkhebel angelenkt sein. Führungsrotoren der Rotorwalzen ermöglichen eine Seitwärtsbewegung des Luftfahrzeugs ohne eine resultierende Rollbewegung. Dazu könnten alle Führungsrotoren hinsichtlich ihres Schubs gleich gesteuert werden.

Ein Drehmanöver des Luftfahrzeugs um die Hochachse des Rumpfs könnte entweder durch eine ungleichmäßige Schubsteuerung der Rotorwalzen oder der Führungsrotoren durchgeführt werden. Dazu müssten nur jeweils zwei gegenüberliegende Rotorwalzen oder Führungsrotoren, die nicht dem gleichen Rotorwalzenpaar angehören, in geeigneter Weise hinsichtlich ihres Schubs angesteuert werden.

Zum Steigen oder Sinken des Luftfahrzeugs könnte der Auftriebsschub des vorderen und des hinteren Antriebs gleich gesteuert werden. Die Erhöhung des Steigschubs könnte über die Vergrößerung des Blattwinkels und/oder über eine Drehzahlerhöhung der Rotorwalzen erreicht werden. Hierbei wird ein wesentlicher Unterschied der Erfindung zu herkömmlichen Hubschraubern offenbar. Herkömmliche Hubschrauber erzeugen nämlich ihren Steigschub über eine kollektive Vergrößerung des Blattwinkels und/oder eine Drehzahlerhöhung des Rotors. Bei der vorliegenden Erfindung hingegen wird der Steigschub über die zyklische Blattverstellung erreicht.

Zur Erreichung des Ausrichtung bzw. Trimmung der Fluglage des Rumpfs könnten die vorderen oder hinteren bzw. die seitlichen gegenüberliegenden Antriebe hinsichtlich ihres Schubs unterschiedlich angesteuert werden. Die Erfindung ermöglicht, über die Trimmungsfähigkeit unterschiedliche permanente Fluglagen einzuhalten, und zwar unabhängig vom dynamischen Flugzustand.

Das erfindungsgemäße Luftfahrzeug kann die gleichen flugdynamischen Zustände eines herkömmlichen Hubschraubers ohne die Verwendung einer kollektiven Blattverstellung erreichen. Die konstruktive Ausführung des erfindungsgemäßen Luftfahrzeugs ist deshalb wesentlich einfacher. Darüber hinaus kann das erfindungsgemäße Luftfahrzeug Manöver mit vollkommen entkoppelten Bewegungen bzw. reine Translationsbewegungen oder Shiftmanöver ohne damit verbundene Nick- und/oder Rollbewegungen durchführen. Derartige Manöver oder Bewegungen sind herkömmlichen Hubschraubern nicht möglich. Zudem kann die Fluglage des Rumpfs getrimmt werden. Der Hubschrauber kann alle Lagen im gesamten Bereich von 360 Grad um die Querachse des Rumpfs stabil einnehmen. Da das erfindungsgemäße Luftfahrzeuge über zwei oder vier Rotorwalzen mit im Prinzip beliebiger Anzahl von Flügelblättern je Rotorwalze verfügen kann, kann ein wesentlich höherer Auftriebsschub erreicht werden und können somit wesentlich höhere Hublasten transportiert werden, als dies mit herkömmlichen Hubschraubern möglich ist.

Bei einer Anordnung der Rotorwalzenlängsachse bzw. der Rotationsachse parallel bzw. koaxial zur Querachse des Rumpfs zeigt sich immer noch der Nachteil, dass die Flügelblätter, die sich entgegen dem Luftfahrtstrom bewegen, und solche, die sich in Richtung des Luftfahrtstroms bewegen, in ineffizienter Weise drehzahlabhängig und fluggeschwindigkeitsabhängig unterschiedlich angeströmt werden. Zusätzlich besteht bei dieser Konstruktion immer noch der Nachteil, dass sich die Fluggeschwindigkeit zur Bahngeschwindigkeit der Flügelblätter addiert und so die maximale Fluggeschwindigkeit stark begrenzt bleibt. Diese Nachteile können durch die folgende Ausgestaltung des erfindungsgemäßen Luftfahrzeugs behoben werden.

Dazu werden die Rotorwalzenlängsachsen bzw. die Rotationsachsen nicht mehr parallel bzw. koaxial zur Rumpfquerachse angeordnet, sondern parallel bzw. koaxial zur Rumpflängsachse. Für eine Antriebseinrichtung könnten dann mindestens zwei Rotorwalzen hintereinander mit gemeinsamer Rotorwalzenlängsachse bzw. Rotationsachse eingesetzt werden, um die erforderlichen Manövrierdrehmomente erzeugen zu können. Bei der Verwendung von nur zwei Rotorwalzen könnten diese hintereinander und über Kopf über dem Rumpf angeordnet werden. Bei der Verwendung von vier Rotorwalzen könnten diese auch seitlich mit je zwei hintereinander liegenden Rotorwalzen auf jeder Seite am Rumpf angeordnet werden. Je zwei hintereinander liegende oder nebeneinander liegende bzw. gegenüber liegende Rotorwalzen können dann zur Vermeidung unerwünschter Drehmomente gegensinnig rotieren.

Bei einer besonders günstigen Anordnung könnten neben- oder hintereinander angeordnete Anordnungen von Flügelblättern oder Walzen quasi gespiegelt angeordnet sein. Man kann hier auch von einer verbundenen und gespiegelten Hintereinanderanordnung der Rotorwalzen sprechen. Bei dieser Anordnung ist nur ein Führungselement für beide Rotorwalzen erforderlich und es reicht der Antrieb eines einzigen Antriebselements aus, da die Rotorwalzen über das gemeinsame Führungselement bzw. die beidseitigen Unterstützungsachsen fest miteinander gekoppelt werden können. Bei dieser Anordnung mit nur einem Antrieb könnten allerdings Manövrierdrehmomente nur noch durch die zyklische Flügelblattverstellung und nicht mehr durch eine unterschiedliche Drehzahlsteuerung für beide Rotorwalzen erreicht werden. Außerdem können die Drehmomente, die durch den Luftwiderstand gegen die rotierenden Rotorblätter entstehen, nicht mehr durch eine getrennt angetriebene gegensinnige Rotation der Rotorwalzen kompensiert werden.

Eine noch größere konstruktive Vereinfachung des erfindungsgemäßen Luftfahrzeugs könnte dadurch erreicht werden, dass an beiden Enden der Flügelblätter jeweils ein vom jeweils anderen Steuerelement unabhängig betätigbares Steuerelement angeordnet ist. Beispielsweise könnte nur noch eine Rotorwalze verwendet werden, die allerdings zwei Steuerelemente oder Steuerringe aufweist. Die Flügelblätter könnten dann an jedem ihrer Enden entweder in einem Antriebselement oder in einem Führungselement gelagert und an jedem ihrer Enden in Steuerelementen oder Steuerringnuten geführt werden. Bei dieser Ausführung könnten Manövrierdrehmomente, die senkrecht zur Rotorwalzenlängsachse bzw. Rotationsachse verlaufen, durch eine zyklische Torsion der Flügelblätter erreicht werden. Die Torsion erfolgt durch eine relative Verschiebung der beiden Steuerelemente oder Steuerringe zueinander. Dadurch ändert sich der Blattwinkel und der punktuelle Schub der Flügelblätter von einem Ende der Flügelblätter zum anderen Ende hin stetig. Bei der vorher beschriebenen Ausgestaltung des erfindungsgemäßen Luftfahrzeugs werden Manövrierdrehmomente durch unterschiedliche Gesamtschubvektoren der einzelnen Rotorwalzen erzeugt. Eine Rotorwalze mit Torsionssteuerung wirkt wie zwei getrennt steuerbare Rotorwalzen.

Durch die zur Längsachse des Rumpfs parallele bzw. koaxiale Ausrichtung der Rotorwalzenlängsachsen bzw. Rotationsachsen ändert sich die Zuordnung der Schuberzeugung zu den Flugmanövern. Seitliche Shiftmanöver oder Drehmanöver um die Hochachse des Rumpfs können nicht mehr mittels der Führungsrotoren durchgeführt werden, sondern nur noch durch die Schubsteuerung der Rotorwalzen. Vorwärts gerichtete Shiftmanöver können hingegen nicht mehr mittels der Rotorwalzen, sondern nur noch durch die Führungsrotoren durchgeführt werden. Da es energetisch günstiger ist, den Vortrieb des Luftfahrzeugs nicht wie üblich durch die gekoppelte Nickbewegung zu erreichen, sondern im Rahmen einer rein translatorischen Bewegung, könnten die relativ schwachen Führungsrotoren durch kräftige Verstellpropeller ersetzt werden.

Bei einer derartigen Ausgestaltung des erfindungsgemäßen Luftfahrzeugs könnte ein Antriebsstrang aus Antriebskomponenten der Antriebseinrichtung wie folgt aufgebaut sein: Verstellpropeller, Wellenleistungsturbine mit Rumpfbefestigung und beidseitig durchgeführter Turbinen-Leistungswelle, vorderes Steuerelement oder vorderer Steuerring, Antriebselement oder Antriebsscheibe der vorderen Rotorwalze, vordere parallele Flügelblätter, Führungselement oder Führungsscheibe mit beidseitiger Unterstützungsachse, hintere parallele Flügelblätter, Antriebselement oder Antriebsscheibe der hinteren Rotorwalze, hinteres Steuerelement oder hinterer Steuerring und hintere Lagerachsenaufnahme mit Rumpfbefestigung des Antriebselements oder der Antriebsscheibe der hinteren Rotorwalze, wobei der Verstellpropeller vorne auf der Turbinenwelle sitzt und die Lagerachse bzw. Lagerwelle des ersten Antriebselements oder der ersten Antriebsscheibe hinter der Turbine ebenfalls mit der durchgeführten Turbinenwelle gekoppelt ist. Die Turbine im Antriebsstrang ersetzt die sonst noch notwendige Lagerachsenaufnahme mit Rumpfbefestigung für das vordere Antriebselement oder die vordere Antriebsscheibe.

Alternativ könnte die Antriebsturbine oder könnten die Antriebsturbinen auch in dem Rumpf oder auf dem Rumpf angeordnet sein und den Antriebsstrang über ein Getriebe antreiben. Bei dieser alternativen Ausgestaltung könnte eine Antriebsturbine zwei Seitenantriebsstränge antreiben oder bei der Verwendung von zwei Antriebsturbinen könnten diese einfacher über ein Getriebe gekoppelt werden, um dem Ausfall einer Antriebsturbine vorzubeugen.

Im Rahmen einer konkreten Ausgestaltung könnte mindestens eine Antriebsturbine im Rumpf des Luftfahrzeugs angeordnet sein. Hierdurch ist eine geschützte Anordnung der Antriebsturbine gewährleistet.

Die Anordnung der Antriebsturbine oder der Antriebsturbinen im Rumpf hätte den weiteren Vorteil, dass die Turbinenabgase seitlich aus dem Rumpf heraus direkt an die Rotorwalze oder über die Rotorwalze geleitet werden könnten. Damit könnte der über der Rotorwalze entstehende und von der Rotorwalze selbst erzeugte Unterdruck durch das Zuströmen der Turbinenabgase teilweise ausgeglichen werden und somit der notwendige selbstinduzierte Antriebsleistungsaufwand teilweise vermindert werden. Die heißen Turbinenabgase könnten dann gleichzeitig eine mögliche Vereisung der Rotorwalze verhindern und die heißen Turbinenabgase könnten derart verwirbelt und nach unten abgelenkt werden, dass sie keine anderen Turbineneinlässe anderer Antriebsturbinen erreichen und zum Ausfall anderer Turbinen führen können.

Der Verstellpropeller müsste so ausgelegt werden, dass über seine Propellerblattverstellung sowohl Vorwärtsschub als auch Rückwärtsschub erreicht werden können. Um den induzierten Leistungsaufwand weiter zu reduzieren, ist sowohl vor einer Rotorwalze als auch hinter dieser Rotorwalze jeweils ein Verstellpropeller oder Propeller angeordnet. Der vordere Propeller könnte dann als Zugpropeller und der hintere als Druckpropeller ausgelegt werden. Zwischen den Verstellpropellern oder Propellern - beispielsweise zwischen dem Zugpropeller und dem Druckpropeller - könnten zwei oder mehrere hintereinander angeordnete Rotorwalzen angeordnet sein.

Im Schwebeflug des Luftfahrzeugs könnte man die beiden obigen Propeller gegeneinander drückend betreiben. Beide Propeller könnten für den Schwebeflug so eingestellt werden, dass sich ihre Vortriebswirkung gegenseitig kompensiert aber trotzdem zusätzliche Luftmasse der Rotorwalze oder den entsprechenden Rotorwalzen zugeführt wird.

Der Propeller kann zusätzlich zum teilweisen Drehmomentausgleich genutzt werden, um ein nicht kompensierbares Restdrehmoment, das durch die Rotorwalzenrotation bzw. den reaktiven Luftwiderstand entsteht, zu kompensieren. Ein solches nicht kompensierbares Drehmoment tritt beispielsweise bei der Verwendung einer einzigen torsionsgesteuerten Rotorwalze auf - siehe oben. Dazu kann mittels eines Umkehrgetriebes die Propellerrotation gegensinnig zur Rotorwalzenrotation eingestellt werden. Dieser Drehmomentausgleich ist besonders interessant für kleinere erfindungsgemäße Luftfahrzeuge mit nur einem Antriebsstrang.

Bei einer weiteren vorteilhaften Ausführungsform könnte am Rumpf mindestens eine Hilfstragfläche oder Tragfläche angeordnet sein, an der oder an denen die Rotorwalze oder Rotorwalzen angeordnet oder aufgehängt sind.

Ein auftretendes oder nicht kompensierbares, vom Luftwiderstand herrührendes Drehmoment hat auf das erfindungsgemäße Luftfahrzeug nicht die gravierende Auswirkung, wie auf einen herkömmlichen Hubschrauber. Beim herkömmlichen Hubschrauber muss dieses Drehmoment üblicherweise durch einen zweiten Rotor, beispielsweise einen Heckrotor, unbedingt kompensiert werden, um eine permanente Rotation des Rumpfs um seine Hochachse zu verhindern. Beim erfindungsgemäßen Luftfahrzeug treten solche Drehmomente um die Hochachse nicht auf. Entsprechende Drehmomente treten lediglich um die Längsachse des Rumpfs auf und führen allerhöchstens zu einer seitlichen Pendelauslenkung des Rumpfs. Das erfindungsgemäße Luftfahrzeug ist flugstatisch wesentlich stabiler als herkömmliche Hubschrauber.

Durch die Anordnung der Rotorwalzenlängsachsen bzw. Rotationsachsen parallel bzw. koaxial zur Längsachse des Rumpfs bleibt bei der Vorwärtsbewegung des Hubschraubers die Geschwindigkeitsüberlagerung der Fahrtgeschwindigkeit mit der Rotor-Bahngeschwindigkeit aus, denn beide Geschwindigkeitskomponenten stehen senkrecht zueinander.

Das erfindungsgemäße Luftfahrzeug ermöglicht deshalb wesentlich höhere maximale Fluggeschwindigkeiten als herkömmliche Hubschrauber. Im Prinzip sind die maximalen Fluggeschwindigkeiten von Turboprop-Flugzeugen auch bei dem erfindungsgemäßen Luftfahrzeug möglich. Darüber hinaus besteht die Erwartung, dass das erfindungsgemäße Luftfahrzeug sogar noch schneller als ein Turboprop-Flugzeug gleicher Antriebsleistung fliegen kann, weil das erfindungsgemäße Luftfahrzeug kein Flugzeugleitwerk und keine Flugzeugtragflügel aufweist, die einen erheblichen zusätzlichen Luftwiderstand gegenüber dem erfindungsgemäßen Luftfahrzeug erzeugen. Das erfindungsgemäße Luftfahrzeug weist die Flugdynamik sowohl eines herkömmlichen Hubschraubers als auch eines herkömmlichen Flugzeugs auf und kann deshalb flugdynamisch wie ein Hubschrauber oder ein Flugzeug geflogen werden. Der Flugbetrieb des erfindungsgemäßen Luftfahrzeugs ist gegenüber herkömmlichen Hubschraubern wesentlich energieeffizienter, da mit zunehmender Fluggeschwindigkeit keine zunehmenden Rollmomente auftreten. Somit vermeidet das erfindungsgemäße Luftfahrzeug sämtliche bekannten, in der Einleitung genannten Nachteile herkömmlicher Hubschrauber. Zudem können wegen der zur Rumpflängsachse parallelen bzw. koaxialen Anordnungsmöglichkeit der Rotorwalzen zwei oder mehr Rotorwalzen am Rumpf seitlich hintereinander und seitlich nebeneinander angeordnet werden. Dadurch sind große Rumpfkonstruktionen mit Traglasten von um die 200 Tonnen oder alternativ von mehr als 200 Passagieren realisierbar.

Durch die vorgenannten Vorteile und wegen der fehlenden überhängenden Überkopf-Tragrotoren sind mit dem erfindungsgemäßen Luftfahrzeug Andockmanöver und damit schwierige Transport, Rettungs- und Bergungsmanöver möglich.

Aus den oben genannten technischen Vorteilen des erfindungsgemäßen Luftfahrzeugs entstehen wirtschaftliche, logistische und strategische Vorteile gegenüber dem herkömmlichen zivilen und militärischen Flugbetrieb.

Da das erfindungsgemäße Luftfahrzeug prinzipiell das gleiche Frachtgewicht oder die gleiche Passagierzahl transportieren kann wie Mittel- oder Langstreckenflugzeuge und vergleichbar hohe Fluggeschwindigkeiten und Reichweiten aufweist, stellt das erfindungsgemäße Luftfahrzeug eine erhebliche Konkurrenz zum normalen Flugzeugmittel- und Flugzeuglangstreckenbereich dar, wobei jedoch gleichzeitig weitergehend ökologische, wirtschaftliche und logistische Vorteile vorliegen. Das erfindungsgemäße Luftfahrzeug kann Landeplätze aus großer Höhe im senkrechten Sinkflug anfliegen und in gleicher Weise starten. Dadurch wird die von herkömmlichen Flugzeugen bekannte Lärmbelastung in den Landeplatz umgebenden Wohnbereichen vermieden.

Das erfindungsgemäße Luftfahrzeug benötigt keine kostenintensive Infrastruktur wie beispielsweise Flugplätze mit weitläufigen Flugzeuglandebahnen. Dadurch werden die Transportkosten bei einem erfindungsgemäßen Luftfahrzeug gesenkt und kann das erfindungsgemäße Luftfahrzeug beliebige Städte und deren Innenstädte direkt anfliegen, auch wenn diese Städte keinen Flughafen aufweisen. Es könnten infrastrukturarme Flugnetze aufgebaut werden. Dies ist besonders für die wirtschaftliche Entwicklung von Ländern vorteilhaft, die nicht über die Mittel verfügen, eine Infrastruktur aus herkömmlichen Flughäfen aufzubauen.

Im Langstreckenflugbetrieb, beispielsweise über Ozeane hinweg, kann das erfindungsgemäße Luftfahrzeug im Gegensatz zu normalen Flugzeugen auf hoher See positionierte Mutterschiffe anfliegen, um Wartung, Betankung oder Notlandungen durchzuführen. Das erfindungsgemäße Luftfahrzeug kann bei Notlandungen mit geringer Geschwindigkeit auf Wasser oder Land aufsetzen und so die übliche Zerstörung der Flugzeuge bei Wassernotlandungen oder die häufige Zerstörung der Flugzeuge bei Notlandungen auf dem Land verhindern. Das erfindungsgemäße Luftfahrzeug ist wesentlich sicherer als herkömmliche Mittel- und Langestreckenflugzeuge.

Aufgrund der hohen Traglast, Manövrierbarkeit und Andockfähigkeit des erfindungsgemäßen Luftfahrzeugs können Bergungs- und Rettungsaktionen durchgeführt werden, die mit herkömmlichen Hubschraubern nicht möglich sind. Mit der Erfindung hätten Opfer des Anschlags auf das World-Trade-Center in New York aus den damals unzugänglichen Gebäudeetagen gerettet werden können. Mit der Erfindung kann eine Versorgung oder Evakuierung von Krisen- oder Katastrophengebieten besser und schneller durchgeführt werden als mit den bisher zur Verfügung stehenden Transportmitteln.

Bei der militärischen Anwendung ermöglicht das erfindungsgemäße Luftfahrzeug vollkommen neue, wesentlich effizientere Operationen und Strategien. So können beispielsweise große Material- oder Truppenbewegungen, die bisher nur über langsame, kombinierte Transportwege aus beispielsweise Schiffstransport- und/oder Graßflugzeugtransport- und/oder Landtransport möglich sind, mit dem erfindungsgemäßen Luftfahrzeug wesentlich schneller direkt in die militärischen Zielgebiete geführt werden. Die durch das erfindungsgemäße Luftfahrzeug mögliche Zeitersparnis und Aufwandserspamis ist von enormer militärisch-strategischer Bedeutung. Beispielsweise brauchen im Rahmen von militärischen Operationen keine Flugplätze mehr besetzt, angelegt und gesichert werden. Hochseeschiffe können an jedem Punkt auf offener See versorgt werden, ohne dass sie Kreuzungspunkte mit Tenderschiffen anlaufen müssen oder auf Tenderschiffe warten müssen.

In der Zeichnung zeigen
- Fig. 1: in schematischen Vorder-, Rück-, Drauf- und Seitenansichten ein gattungsgemäßes Luftfahrzeug, bei dem keine Verstellpropeller oder Propeller vorgesehen sind,
- Fig. 2: in schematischen Vorder-, Rück-, Drauf- und Seitenansichten ein weiteres gattungsgemäßes Luftfahrzeug, bei dem keine Verstellpropeller oder Propeller vorgesehen sind,
- Fig. 3: in schematischen Vorder-, Drauf- und Seitenansichten das Luftfahrzeug aus Fig. 2 mit einer am vorderen Teil des Rumpfs angeordneten Andockeinrichtung,
- Fig. 4: ein Flügelblatt der Antriebseinrichtung in einem schematischen Querschnitt,
- Fig. 5: in einer Draufsicht eine Antriebsscheibe für die Flügelblätter,
- Fig. 6: in einer Draufsicht einen Steuerring mit kreisförmiger Ringnut und einer Exzenterscheibenführung,
- Fig. 7: in einer Draufsicht die Antriebsscheibe mit durch gestrichelte Linien angedeutetem Steuerring in der Neutralstellung des Steuerrings,
- Fig. 8: in einer Draufsicht die Antriebsscheibe mit durch gestrichelte Linien angedeutetem Steuerring in einer Betriebsstellung, wobei die Schubkraft in Pfeilrichtung verläuft,
- Fig. 9: in einer schematischen Seitenansicht ein Ausführungsbeispiel eines erfindungsgemäßen Luftfahrzeugs und
- Fig. 10: in einer schematischen Vorder- und Rückansicht das Ausführungsbeispiel aus Fig. 9.

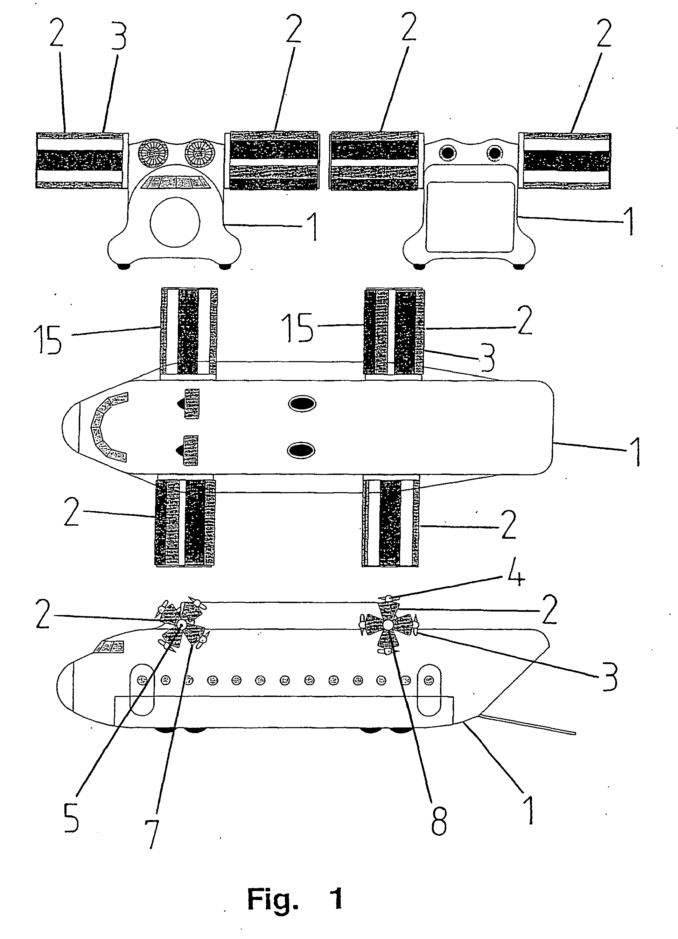

Fig. 1 zeigt in schematischen Vorder-, Rück-, Drauf- und Seitenansichten ein gattungsgemäßes Luftfahrzeug. Das Luftfahrzeug weist einen Rumpf 1 und eine mit dem Rumpf 1 gekoppelte Antriebseinrichtung 2 zur Erzeugung eines definierbaren Auftriebs auf. Die Antriebseinrichtung 2 weist mehrere Flügelblätter 3 auf, die um einen vorgebbaren Blattwinkel um eine Schwenkachse 4 verschwenkbar sind. Die Flügelblätter 3 sind um eine Rotationsachse 5 drehbar gelagert und der Blattwinkel ist zur Erzeugung des Auftriebs während der Drehung veränderbar. Des Weiteren sind die jeweiligen Schwenkachsen 4 der Flügelblätter 3 im Wesentlichen parallel zur Rotationsachse 5 angeordnet. Dabei sind die Schwenkachsen 4 der Flügelblätter 3 auch im Wesentlichen parallel zueinander angeordnet.

Weiterhin sind die Schwenkachsen 4 äquidistant zueinander und im gleichen Abstand zur Rotationsachse 5 angeordnet.

Die Flügelblätter 3 sind an einem Ende in einem Antriebselement 7 mit ihrer Schwenkachse 4 schwenkbar gelagert. Des Weiteren weist jedes Flügelblatt 3 eine Steuerachse 6 als Angriffspunkt für ein Verschwenken der Flügelblätter 3 um die Schwenkachse 4 auf. Das Antriebselement 7 weist eine Lagerachse 8 auf.

Bei dem hier gezeigten Luftfahrzeug bilden mehrere Flügelblätter 3 eine um jeweils eine der Rotationsachsen 5 rotierbare Walze 15, wobei die Antriebseinrichtung 2 insgesamt vier derartige Walzen 15 aufweist. Auf jeder Längsseite des Rumpfs 1 sind zwei Walzen 15 angeordnet. Dabei fluchten die Rotationsachsen 5 sich gegenüberüegender Walzen 15.

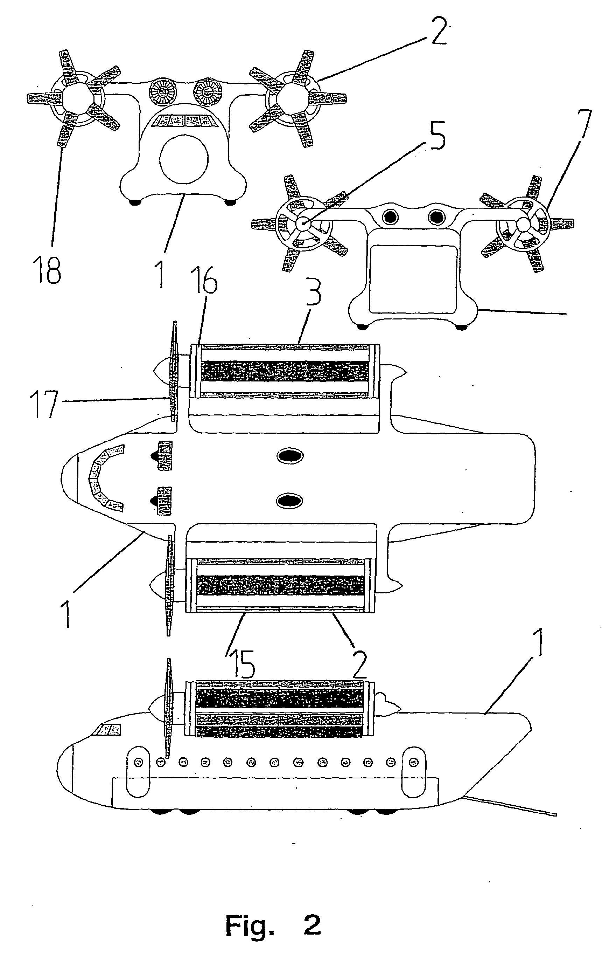

Fig. 2 zeigt in schematischen Vorder-, Rück-, Drauf- und Seitenansichten ein zweites gattungsgemäßes Luftfahrzeug. Bei diesem Luftfahrzeug sind Walzen 15 parallel zu einer in Vorwärts-Flugrichtung verlaufenden Längsachse des Rumpfs 1 angeordnet. Die Flügelblätter 3 der Walzen 15 sind torsionsgesteuert und weisen an beiden Enden ein Steuerelement zur Steuerung der Steuerachse auf.

An einem Führungselement 16 ist ein Führungsrotor 17 für Vorwärtsbewegungen oder Rückwärtsbewegungen angeordnet. Der Führungsrotor 17 ist aus mehreren Rotorblättern 18 aufgebaut. Bei dem hier gezeigten Luftfahrzeug sind zwei Wellenleistungsantriebsturbinen überkopf angeordnet.

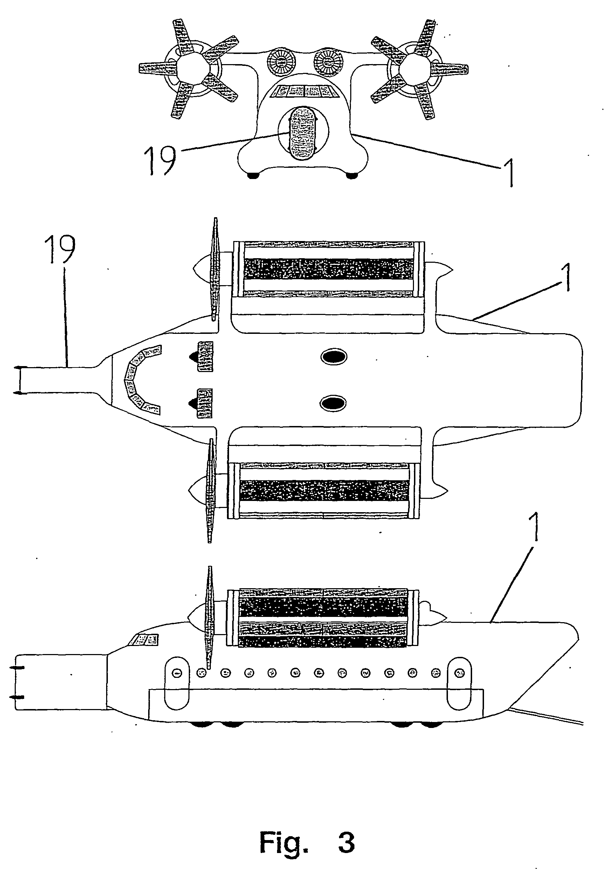

Fig. 3 zeigt in schematischen Vorder-, Drauf- und Seitenansichten das Luftfahrzeug aus Fig. 2, wobei dem Rumpf 1 eine Andockeinrichtung 19 zur Zuführung oder Entladung von Transportgut und/oder zum Ein- oder Ausstieg von Personen zugeordnet ist. Die Andockeinrichtung 19 ist als Fluchtröhre ausgebildet.

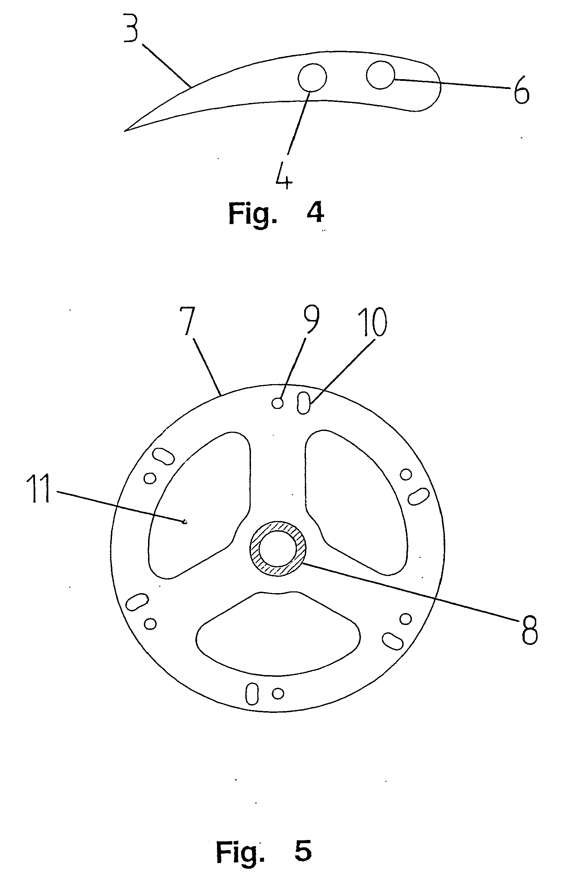

Fig. 4 zeigt in einer schematischen Ansicht das Querschnittsprofil eines Flügelblatts 3. Dabei ist einerseits die Schwenkachse 4 und andererseits die Steuerachse 6 erkennbar.

Fig. 5 zeigt in einer Draufsicht ein als Antriebsscheibe ausgebildetes Antriebselement 7, das eine Lagerachse 8 aufweist. Das Antriebselement 7 weist Durchgänge 9 zur Lagerung der Schwenkachsen 4 der Flügelblätter 3 auf. Des Weiteren weist das Antriebselement 7 Durchgänge 10 für die Steuerachsen 6 der Flügelblätter 3 auf. Die Durchgänge 10 sind als gekrümmte Langlöcher ausgebildet. Aus Gründen der Gewichtsersparnis weist das Antriebselement 7 Durchgänge 11 auf.

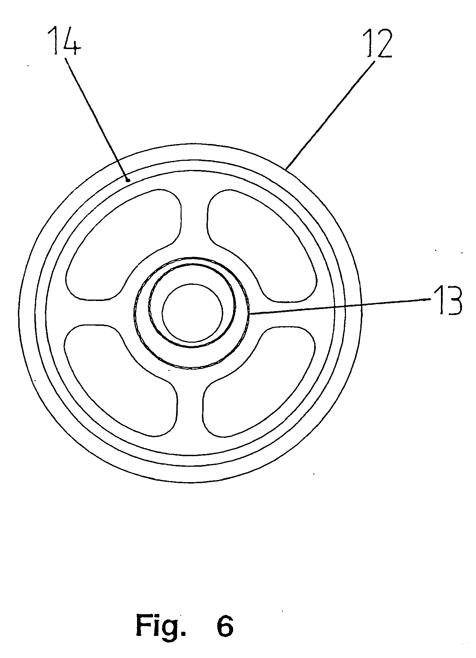

Fig. 6 zeigt in einer schematischen Draufsicht ein als Steuerring ausgebildetes Steuerelement 12 mit einer im Bereich des äußeren Rands des Steuerrings verlaufenden Ringnut 14 zur Führung der Steuerachse 6 eines Flügelblatts 3. Zur Verschiebung des Steuerelements 12 relativ zur Rotationsachse 5 ist das Steuerelement 12 in einer Führung verschiebbar, die als Exzenterscheibenführung 13 ausgebildet ist. Bei einer beispielhaften Anordnung ist das Steuerelement 12 parallel zum Antriebselement 7 angeordnet, wobei die Steuerachse 6 eines Flügelblatts 3 durch den Durchgang 10 im Antriebselement 7 hindurchgesteckt und dann in der Ringnut 14 des Steuerelements 12 gelagert ist.

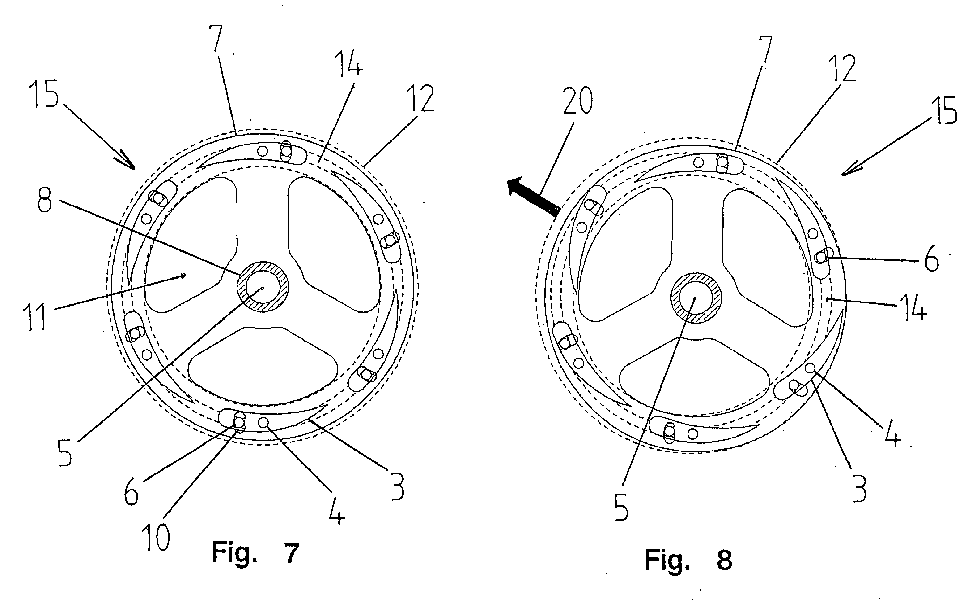

Fig. 7 zeigt in einer schematischen Draufsicht eine Anordnung des Antriebselements 7 mit dahinter angeordnetem Steuerelement 12 einer Walze 15. Das Steuerelement 12 ist lediglich durch gestrichelte Linien und nur in seinem äußeren Randbereich dargestellt. Das Steuerelement 12 befindet sich in Fig. 7 in seiner Neutralstellung, wobei kein Schub und keine Luftablenkung durch die Flügelblätter 3 erzeugt werden. Das Querschnittsprofil des Flügelblatts 3 ist zur Rotationsachse 5 hin konkav gekrümmt. Die Flügelblätter 3 sind quasi in einem gedachten Kreiszylinder angeordnet, der durch die Krümmung der Flügelblätter 3 erzeugt wird.

In Fig. 8 ist das Steuerelement 12 mittels der Führung relativ zur Rotationsachse 5 verschoben. Dabei wird ein Schub in der Schubrichtung 20 erzeugt. Man kann in Fig. 8 das Prinzip der zyklischen Flügelblattverstellung mittels des Steuerelements 12 erkennen, wobei die Flügelblätter 3 während einer Drehung des Antriebselements 7 relativ zum Steuerelement 12 einmal zwischen ihren extremen Auslenkungen verschwenkt werden. Auf einer durch die Schubrichtung 20 definierten und durch die Rotationsachse 5 verlaufenden Linie befinden sich quasi die beiden extremen Auslenkungspositionen der Flügelblätter 3. In den um 90 Grad hierzu versetzten Positionen befinden sich die Flügelblätter 3 wieder in ihrer Neutralstellung, in der sie keinen Schub und keine Luftablenkung erzeugen. Die Drehrichtung der Flügelblätter 3 bei dem in Fig. 8 gezeigten Ausführungsbeispiel ist im Uhrzeigersinn.

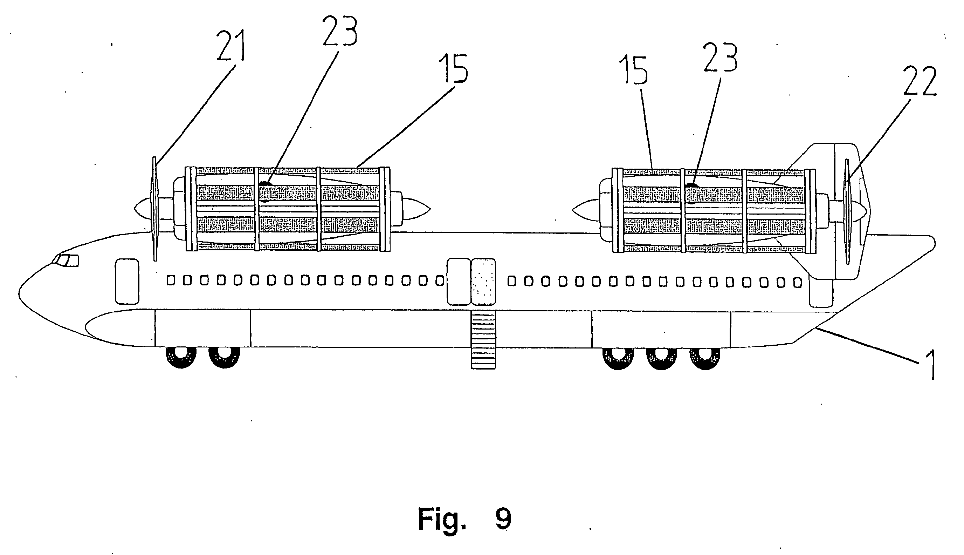

Fig. 9 zeigt in einer schematischen Seitenansicht ein Ausführungsbeispiel eines erfindungsgemäßen Luftfahrzeugs mit einem Rumpf 1, wobei vor einer Rotorwalze 15 ein Zugpropeller 21 und hinter einer weiteren Rotorwalze 15 ein Druckpropeller 22 angeordnet sind. Des Weiteren sind Turbinenauslässe 23 im Bereich der Rotorwalzen 15 angeordnet.

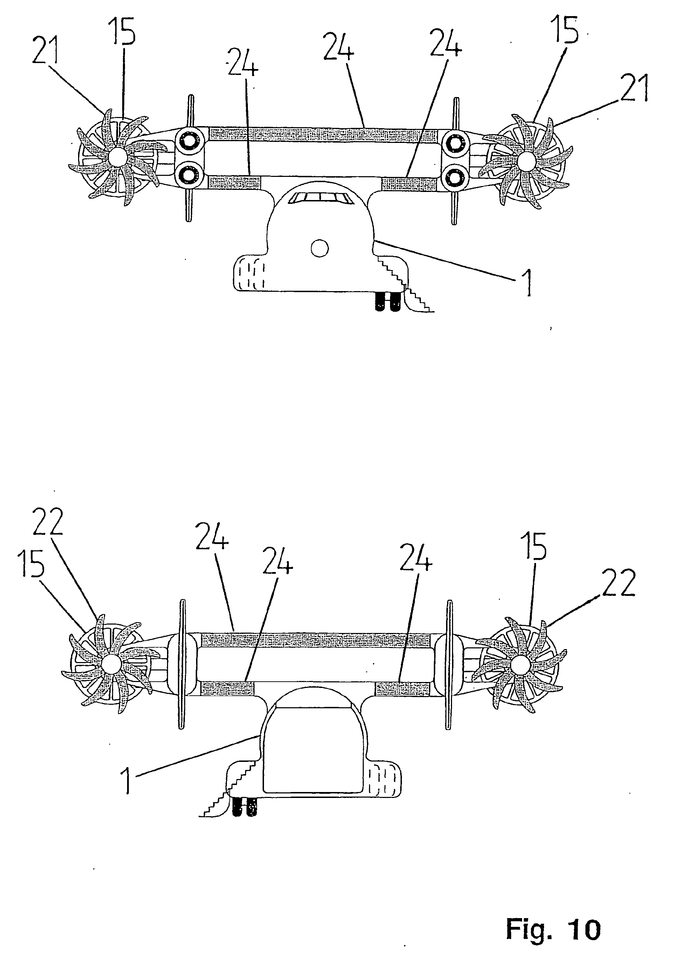

Fig. 10 zeigt in einer schematischen Vorder- und Rückansicht das Ausführungsbeispiel aus Fig. 9, wobei an dem Rumpf 1 Hilfstragflächen oder Tragflächen 24 angeordnet sind. Die Rotorwalzen 15 sind an den Tragflächen 24 angeordnet oder aufgehängt, Die Zugpropeller 21 sind vor den Rotorwalzen 15 und die Druckpropeller 22 hinter den Rotorwalzen 15 angeordnet.

## Patentansprüche

1. Luftfahrzeug mit einem Rumpf (1) und einer mit dem Rumpf (1) gekoppelten Antriebseinrichtung (2) zur Erzeugung eines definierbaren Auftriebs, wobei die Antriebseinrichtung (2) mehrere Flügelblätter (3) aufweist, wobei die Flügelblätter (3) um einen vorgebbaren Blattwinkel um eine Schwenkachse (4) verschwenkbar und um eine Rotationsachse (5) drehbar gelagert sind, wobei der Blattwinkel zur Erzeugung des Auftriebs während der Drehung veränderbar ist, wobei die jeweiligen Schwenkachsen (4) der Flügelblätter (3) im Wesentlichen parallel zur Rotationsachse (5) angeordnet sind, wobei mehrere Flügelblätter (3) eine um jeweils eine der Rotationsachsen (5) rotierbare Walze (15) bilden und wobei die Antriebseinrichtung (2) mindestens zwei derartige Walzen (15) aufweist,
**dadurch gekennzeichnet, dass** sowohl vor als auch hinter einer Rotorwalze (15) jeweils ein Verstellpropeller oder Propeller (21, 22) angeordnet ist.

2. Luftfahrzeug nach Anspruch 1, **dadurch gekennzeichnet, dass** die jeweiligen Schwenkachsen (4) der Flügelblätter (3) im Wesentlichen äquidistant zueinander angeordnet sind und/oder dass die Schwenkachsen (4) der Flügelblätter (3) jeweils im Wesentlichen im gleichen Abstand zur Rotationsachse (5) angeordnet sind und/oder dass die Schwenkachsen (4) der Flügelblätter (3) im Wesentlichen parallel zueinander angeordnet sind und/oder dass die Schwenkachsen (4) der Flügelblätter (3) durch den Schwerpunkt der Flügelblätter (3) verlaufend angeordnet sind.

3. Luftfahrzeug nach Anspruch 1 oder 2, **dadurch gekennzeichnet, dass** das Querschnittsprofil der Flügelblätter (3) zur Rotationsachse (5) hin konkav gekrümmt ist und/oder dass die Flügelblätter (3) an mindestens einem Ende jeweils eine Steuerachse (6) als Angriffspunkt für ein Verschwenken der Flügelblätter (3) um die Schwenkachse (4) aufweisen und/oder dass die Flügelblätter (3) an einem Ende an oder in einem Antriebselement (7) schwenkbar gelagert sind, wobei vorzugsweise das Antriebselement (7) um die Rotationsachse (5) drehbar ist oder auf der Rotationsachse (5) drehbar gelagert ist.

4. Luftfahrzeug nach Anspruch 3, **dadurch gekennzeichnet, dass** das Antriebselement (7) eine Lagerachse (8) oder Hohlachse aufweist und/oder dass das Antriebselement (7) als Antriebsscheibe, Antriebskreisscheibe oder Antriebsring ausgebildet ist und/oder dass die Schwenkachsen (4) kreisförmig am Rand des Antriebselements (7) oder der Antriebsscheibe oder der Antriebskreisscheibe oder am Rand des Antriebsrings angeordnet sind.

5. Luftfahrzeug nach Anspruch 3 oder 4, **dadurch gekennzeichnet, dass** das Antriebselement (7) Vertiefungen oder Durchgänge (9) zur Lagerung der Schwenkachsen (4) der Flügelblätter aufweist und/oder dass das Antriebselement (7) Vertiefungen oder Durchgänge (10) für die Steuerachsen (6) der Flügelblätter (3) aufweist, wobei vorzugsweise die Vertiefungen oder Durchgänge (10) für die Steuerachsen (6) der Flügelblätter (3) als vorzugsweise gekrümmte Langlöcher ausgebildet sind, und/oder dass das Antriebselement (7) Vertiefungen, Ausnehmungen oder Durchgänge (11) aufweist.

6. Luftfahrzeug nach einem der Ansprüche 3 bis 5, **dadurch gekennzeichnet, dass** das Antriebselement (7) zum Verschwenken der Flügelblätter (3) um ihre Schwenkachse (4) mit einem Steuerelement (12) zusammenwirkt, wobei vorzugsweise das Steuerelement (12) von der Drehung der Flügelblätter (3) und/oder des Antriebselements (7) entkoppelt ist.

7. Luftfahrzeug nach Anspruch 6, **dadurch gekennzeichnet, dass** das Steuerelement (12) auf der Rotationsachse (5) gelagert ist und/oder dass das Steuerelement (12) eine Zykloidsteuerung aufweist und/oder dass das Steuerelement (12) relativ zur Rotationsachse (5) in einer Führung verschiebbar ist.

8. Luftfahrzeug nach Anspruch 7, **dadurch gekennzeichnet, dass** die Führung zwei senkrecht zueinander angeordnete Linearführungen im Sinne einer Kreuztischführung aufweist oder dass die Führung eine Drehführung in Verbindung mit einer Linearführung im Sinne einer verlängerbaren Drehhebelführung aufweist oder dass die Führung zwei Drehführungen im Sinne einer doppelten Exzenterscheibenführung (13) aufweist, wobei vorzugsweise zwei Exzenterscheiben der Exzenterscheibenführung (13) jeweils ein Stellmotor zugeordnet ist.

9. Luftfahrzeug nach einem der Ansprüche 6 bis 8, **dadurch gekennzeichnet, dass** das Steuerelement (12) eine Ringnut (14) oder Kreisnut zur Aufnahme der Steuerachsen (6) der Flügelblätter (3) aufweist und/oder dass das Steuerelement (12) als Steuerring oder Steuerscheibe ausgebildet ist, wobei vorzugsweise die Ringnut (14) oder der Steuerring eine von der Kreisform abweichende Gestaltung aufweist, wobei vorzugsweise die abweichende Gestaltung eine drehwinkelabhängige Anstellwinkelfunktion oder überlagerte Anstellwinkelfunktionen liefert und wobei vorzugsweise die Anstellwinkelfunktion dem Ausdruck a·cos(x)^{w} proportional ist, wobei a der Anstellwinkel der Flügelblätter (3) in Grad ist und w vorzugsweise eine ganze Zahl - vorzugsweise 11 - ist.

10. Luftfahrzeug nach einem der Ansprüche 6 bis 9, **dadurch gekennzeichnet, dass** die Lagerachse (8) oder Hohlachse des Antriebselements (7) vorzugsweise zentrisch durch das Steuerelement (12) hindurch verlaufend angeordnet ist und/oder dass das Antriebselement (7) und das Steuerelement (12) parallel zueinander angeordnet sind.

11. Luftfahrzeug nach einem der Ansprüche 1 bis 10, **dadurch gekennzeichnet, dass** die Antriebseinrichtung (2) mindestens zwei Anordnungen aus um jeweils eine Rotationsachse (5) drehbaren Flügelblättern (3) aufweist und/oder dass die Rotationsachse (5) oder Rotationsachsen (5) in einer im Wesentlichen horizontalen Ebene angeordnet sind.

12. Luftfahrzeug nach einem der Ansprüche 1 bis 11, **dadurch gekennzeichnet, dass** die Rotationsachse (5) oder Rotationsachsen (5) parallel zu einer in Vorwärts-Flugrichtung verlaufenden Längsachse des Rumpfs (1) angeordnet sind.

13. Luftfahrzeug nach einem der Ansprüche 1 bis 12, **dadurch gekennzeichnet, dass** die Walzen (15) in Richtung der Längsachse gegeneinander versetzt sind und/oder dass auf jeder Längsseite des Rumpfs (1) mindestens eine Walze (15) angeordnet ist und/oder dass zumindest zwei Walzen (15) gegensinnig drehbar sind.

14. Luftfahrzeug nach einem der Ansprüche 1 bis 13, **dadurch gekennzeichnet, dass** auf jeder Längsseite des Rumpfs (1) mindestens zwei Walzen (15) angeordnet sind und dass die Rotationsachsen (5) sich gegenüberliegender Walzen (15) fluchten und/oder dass jede Walze (15) separat steuerbar ist und/oder dass mehrere Walzen (15) zusammen in gleichem Sinn steuerbar sind.

15. Luftfahrzeug nach einem der Ansprüche 1 bis 14, **dadurch gekennzeichnet, dass** die Flügelblätter (3) an ihrem anderen, dem Antriebselement (7) abgewandten Ende an oder in einem Führungselement (16) mittels jeweils einer Schwenkachse (4) schwenkbar gelagert sind, wobei vorzugsweise das Führungselement (16) im Wesentlichen wie das Antriebselement (7) - vorzugsweise scheibenförmig - ausgebildet ist.

16. Luftfahrzeug nach Anspruch 15, **dadurch gekennzeichnet, dass** das Führungselement (16) mit dem Antriebselement (7) mitdrehbar angeordnet ist und/oder dass das Führungselement (16) und das Antriebselement (7) mittels einer Achse oder der Rotationsachse (5) gekoppelt sind und/oder dass dem Führungselement (16) ein Führungsrotor (17) aus mehreren Rotorblättern (18) zugeordnet ist.

17. Luftfahrzeug nach Anspruch 16, **dadurch gekennzeichnet, dass** die Rotorblätter (18) an dem Führungselement (16) angelenkt sind und/oder dass der Führungsrotor (17) über ein durch die Rotationsachse (5) verlaufendes Gestänge angetrieben ist.

18. Luftfahrzeug nach einem der Ansprüche 1 bis 17, **dadurch gekennzeichnet, dass** neben- oder hintereinander angeordnete Anordnungen von Flügelblättern (3) oder Walzen (15) quasi gespiegelt angeordnet sind.

19. Luftfahrzeug nach einem der Ansprüche 6 bis 18, **dadurch gekennzeichnet, dass** an beiden Enden der Flügelblätter (3) jeweils ein vom jeweils anderen Steuerelement (12) unabhängig betätigbares Steuerelement (12) angeordnet ist.

20. Luftfahrzeug nach einem der Ansprüche 1 bis 19, **dadurch gekennzeichnet, dass** mindestens eine Antriebsturbine im Rumpf (1) des Luftfahrzeugs angeordnet ist, wobei vorzugsweise Abgase der Antriebsturbine seitlich aus dem Rumpf (1) heraus direkt an die Rotorwalze (15) oder über die Rotorwalze (15) geleitet sind.

21. Luftfahrzeug nach einem der Ansprüche 1 bis 20, **dadurch gekennzeichnet, dass** zwischen den Verstellpropellern oder Propellern (21, 22) zwei oder mehrere hintereinander angeordnete Rotorwalzen (15) angeordnet sind und/oder dass am Rumpf (1) mindestens eine Hilfstragfläche oder Tragfläche (24) angeordnet ist, an der oder denen die Rotorwalze (15) oder Rotorwalzen (15) angeordnet oder aufgehängt sind.

## Claims

1. An aircraft with a fuselage (1) and with a propulsion system (2) which is coupled to the fuselage (1) and generates a definable lift, wherein the propulsion system (2) has a plurality of blades (3), wherein the blades (3) are pivotable through a predeterminable blade angle about a pivoting axis (4) and are mounted so as to be rotatable about a rotation axis (5), wherein the blade angle is variable during rotation in order to generate the lift, wherein the respective pivoting axes (4) of the blades (3) are arranged substantially parallel to the rotation axis (5), wherein a plurality of blades (3) form a cylinder (15) which is rotatable about a respective one of the rotation axes (5) and wherein the propulsion system (2) has at least two such cylinders (15), **characterised in that** a propeller or variable-pitch propeller (21, 22) is arranged both in front of and behind a rotor cylinder (15).

2. An aircraft according to claim 1, **characterised in that** the respective pivoting axes (4) of the blades (3) are arranged so as to be substantially equidistant from one another and/or **in that** the pivoting axes (4) of the blades (3) are each substantially equally spaced from the rotation axis (5) and/or **in that** the pivoting axes (4) of the blades (3) are arranged substantially parallel to one another and/or **in that** the pivoting axes (4) of the blades (3) are arranged so as to extend through the centre of gravity of the blades (3).

3. An aircraft according to claim 1 or 2, **characterised in that** the cross-sectional profile of the blades (3) is concavely curved towards the rotation axis (5) and/or **in that** the blades (3) each have, at at least one end, a control axis (6) acting as an application point for pivoting the blades (3) about the pivoting axis (4) and/or **in that** the blades (3) are pivotably mounted on or in a propulsion member (7) at one end, wherein preferably the propulsion member (7) is rotatable about the rotation axis (5) or is rotatably mounted on the rotation axis (5).

4. An aircraft according to claim 3, **characterised in that** the propulsion member (7) has a bearing axis (8) or hollow axis and/or in that the propulsion member (7) is formed as a propulsion disc, circular propulsion disc or propulsion ring and/or **in that** the pivoting axes (4) are arranged in a circle at the edge of the propulsion member (7) or the propulsion disc or the circular propulsion disc or at the edge of the propulsion ring.

5. An aircraft according to claim 3 or 4, **characterised in that** the propulsion member (7) has depressions or openings (9) for mounting the pivoting axes (4) of the blades and/or **in that** the propulsion member (7) has depressions or openings (10) for the control axes (6) of the blades (3), wherein preferably the depressions or openings (10) for the control axes (6) of the blades (3) are formed as preferably curved slots, and/or **in that** the propulsion member (7) has depressions, recesses or openings (11).

6. An aircraft according to any one of claims 3 to 5, **characterised in that** the propulsion member (7) co-operates with a control member (12) in order to pivot the blades (3) about their pivoting axis (4), wherein the control member (12) is preferably decoupled from the rotation of the blades (3) and/or the propulsion member (7).

7. An aircraft according to claim 6, **characterised in that** the control member (12) is mounted on the rotation axis (5) and/or **in that** the control member (12) has a cycloidal control and/or **in that** the control member (12) is displaceable in a guide relative to the rotation axis (5).

8. An aircraft according to claim 7, **characterised in that** the guide comprises two linear guides arranged perpendicularly to one another in the manner of a cross-table guide or **in that** the guide comprises a rotary guide in conjunction with a linear guide in the manner of an extendable rotary-lever guide or **in that** the guide comprises two rotary guides in the manner of a double eccentric-disc guide (13), wherein a respective servomotor is preferably associated with two eccentric discs of the eccentric-disc guide (13).

9. An aircraft according to any one of claims 6 to 8, **characterised in that** the control member (12) has an annular groove (14) or circular groove for locating the control axes (6) of the blades (3) and/or **in that** the control member (12) is formed as a control ring or control disc, wherein the annular groove (14) or the control ring preferably has a shape deviating from a circular form, wherein the deviating shape preferably provides an angle-of-incidence function which is dependent upon the rotation angle, or superimposed angle-of-incidence functions and wherein the angle-of-incidence function is preferably proportional to the expression a·cos(x)^{w}, in which a is the angle of incidence of the blades (3) in degrees and w is preferably a whole number, preferably 11.

10. An aircraft according to any one of claims 6 to 9, **characterised in that** the bearing axis (8) or hollow axis of the propulsion member (7) is preferably arranged so as to extend centrally through the control member (12) and/or **in that** the propulsion member (7) and the control member (12) are arranged parallel to one another.

11. An aircraft according to any one of claims 1 to 10, **characterised in that** the propulsion system (2) comprises at least two arrangements of blades (3) which are rotatable about a respective rotation axis (5) and/or **in that** the rotation axis (5) or rotation axes (5) are arranged in a substantially horizontal plane.

12. An aircraft according to any one of claims 1 to 11, **characterised in that** the rotation axis (5) or rotation axes (5) are arranged parallel to a longitudinal axis of the fuselage (1), which longitudinal axis extends in the forward flight direction.

13. An aircraft according to any one of claims 1 to 12, **characterised in that** the cylinders (15) are mutually offset in the direction of the longitudinal axis and/or **in that** at least one cylinder (15) is arranged on each longitudinal side of the fuselage (1) and/or **in that** at least two cylinders (15) are rotatable in opposite directions.

14. An aircraft according to any one of claims 1 to 13, **characterised in that** at least two cylinders (15) are arranged on each longitudinal side of the fuselage (1) and **in that** the rotation axes (5) of opposing cylinders (15) are in alignment and/or **in that** each cylinder (15) is separately controllable and/or **in that** a plurality of cylinders (15) is jointly controllable in the same direction.

15. An aircraft according to any one of claims 1 to 14, **characterised in that** the blades (3) are pivotably mounted on or in a guide member (16) by means of a respective pivoting axis (4) at their other end remote from the propulsion member (7), wherein the guide member (16) is preferably formed in substantially the same way as the propulsion member (7), preferably in the form of a disc.

16. An aircraft according to claim 15, **characterised in that** the guide member (16) is arranged so as to be jointly rotatable with the propulsion member (7) and/or **in that** the guide member (16) and the propulsion member (7) are coupled by means of an axis or the rotation axis (5) and/or **in that** a guide rotor (17) comprising a plurality of rotor blades (18) is associated with the guide member (16).

17. An aircraft according to claim 16, **characterised in that** the rotor blades (18) are articulated on the guide member (16) and/or **in that** the guide rotor (17) is driven via linkage extending through the rotation axis (5).

18. An aircraft according to any one of claims 1 to 17, **characterised in that** arrangements of blades (3) or cylinders (5) arranged side by side or one behind the other are in a quasi mirror-image arrangement.

19. An aircraft according to any one of claims 6 to 18, **characterised in that** a control member (12), which is actuatable independently of the respective other control member (12), is arranged at both ends of the blades (3).

20. An aircraft according to any one of claims 1 to 19, **characterised in that** at least one drive turbine is arranged in the fuselage (1) of the aircraft, wherein exhaust gases from the drive turbine are preferably conducted laterally out of the fuselage (1) directly to the rotor cylinder (15) or over the rotor cylinder (15).

21. An aircraft according to any one of claims 1 to 20, **characterised in that** two or more rotor cylinders (15) arranged one behind the other are arranged between the propellers or the variable-pitch propellers (21, 22) and/or **in that** at least one auxiliary aerofoil or at least one aerofoil (24), on which the rotor cylinder (15) or rotor cylinders (15) are arranged or mounted, is arranged on the fuselage (1).

## Revendications

1. Aéronef avec un fuselage (1) et une installation de propulsion (2) accouplée au fuselage (1) pour engendrer une force ascensionnelle pouvant être définie, l'installation de propulsion (2) présentant plusieurs pales d'hélice (3), les pales d'hélice (3) étant montées pivotantes autour d'un axe de pivotement (4) d'un angle de pale pouvant être prédéfini et rotatives autour d'un axe de rotation (5), l'angle de pale pouvant être modifié pendant la rotation pour engendrer la force ascensionnelle, les axes de pivotement (4) respectifs des pales d'hélice (3) étant disposés pour l'essentiel parallèles à l'axe de rotation (5), plusieurs pales d'hélice (3) formant un cylindre (15) pouvant tourner autour de respectivement l'un des axes de rotation (5) et l'installation de propulsion (2) présentant au moins deux cylindres (15) de ce type,
**caractérisé par le fait qu'**un propulseur réglable ou un propulseur (21, 22) est disposé respectivement aussi bien devant que derrière un cylindre de rotor (15).

2. Aéronef selon la revendication 1, **caractérisé par le fait que** les axes de pivotement (4) respectifs des pales d'hélice (3) sont disposés pour l'essentiel équidistants les uns des autres et/ou que les axes de pivotement (4) des pales d'hélice (3) sont disposés respectivement à la même distance de l'axe de rotation (5) et/ou que les axes de pivotement (4) des pales d'hélice (3) sont disposés pour l'essentiel parallèles les uns aux autres et/ou que les axes de pivotement (4) des pales d'hélice (3) sont disposés passant par le centre de gravité des pales d'hélice (3).

3. Aéronef selon la revendication 1 ou 2, **caractérisé par le fait que** le profil en section transversale des pales d'hélice (3) est recourbé concave en direction de l'axe de rotation (5) et/ou que les pales d'hélice (3) présentent à au moins une extrémité respectivement un axe de commande (6) en tant que point d'action pour un pivotement des pales d'hélice (3) autour de l'axe de pivotement (4) et/ou que les pales d'hélice (3) sont montées pivotantes à une extrémité sur ou dans un élément de propulsion (7), l'élément de propulsion (7) étant de préférence rotatif autour de l'axe de rotation (5) ou monté rotatif sur l'axe de rotation (5).

4. Aéronef selon la revendication 3, **caractérisé par le fait que** l'élément de propulsion (7) présente un axe de palier (8) ou un axe creux et/ou que l'élément de propulsion (7) est réalisé en tant que disque propulseur, disque circulaire propulseur ou couronne propulsive et/ou que les axes de pivotement (4) sont disposés de manière circulaire au bord du disque propulseur ou du disque circulaire propulseur ou au bord de la couronne propulsive.

5. Aéronef selon la revendication 3 ou 4, **caractérisé par le fait que** l'élément de propulsion (7) présente des creux ou des passages (9) pour le montage des axes de pivotement (4) des pales d'hélice et/ou que l'élément de propulsion (7) présente des creux ou des passages (10) pour les axes de commande (6) des pales d'hélice (3), les creux ou les passages (10) pour les axes de commande (6) des pales d'hélice (3) étant de préférence réalisés en tant que trous oblongs de préférence courbés, et/ou que l'élément de propulsion (7) présente des creux, des évidements ou des passages (11).

6. Aéronef selon l'une des revendications 3 à 5, **caractérisé par le fait que** l'élément de propulsion (7) coopère avec un élément de commande (12) pour le pivotement des pales d'hélice (3) autour de leur axe de pivotement (4), l'élément de commande (12) étant de préférence désaccouplé de la rotation des pales d'hélice (3) et/ou de l'élément de propulsion (7).

7. Aéronef selon la revendication 6, **caractérisé par le fait que** l'élément de commande (12) est monté sur l'axe de rotation (5) et/ou que l'élément de commande (12) présente une commande à cycloïde et/ou que l'élément de commande (12) est coulissant dans un guidage par rapport à l'axe de rotation (5).

8. Aéronef selon la revendication 7, **caractérisé par le fait que** le guidage présente deux guidages linéaires disposés orthogonaux l'un à l'autre dans le sens d'un guidage de platine à chariot ou que le guidage présente un guidage rotatif en liaison avec un guidage linéaire dans le sens d'un guidage à levier pivotant pouvant être allongé ou que le guidage présente deux guidages pivotants dans le sens d'un double guidage à disque d'excentrique (13), un moteur de réglage étant de préférence adjoint à deux disques d'excentrique du guidage à disques d'excentrique (13).

9. Aéronef selon l'une des revendications 6 à 8, **caractérisé par le fait que** l'élément de commande (12) présente une gorge annulaire (14) ou une gorge circulaire pour la réception des axes de commande (6) des pales d'hélice (3) et/ou que l'élément de commande (12) est réalisé en tant que bague de commande ou disque de commande, la gorge annulaire (14) ou la bague de commande présentant de préférence une configuration différente d'une forme circulaire, la configuration différente délivrant de préférence une fonction d'angle d'incidence dépendant de l'angle de rotation ou des fonctions d'angle d'incidence superposées et la fonction d'angle d'incidence étant de préférence proportionnelle à l'expression a.cos(x)^{w}, a étant l'angle d'incidence des ailettes de pale (3) en degrés et w étant de préférence un nombre entier - de préférence 11

10. Aéronef selon l'une des revendications 6 à 9, **caractérisé par le fait que** l'axe de palier (8) ou l'axe creux de l'élément de propulsion (7) est disposé s'étendant à travers l'élément de commande (12), de préférence centralement, et/ou que l'élément de propulsion (7) et l'élément de commande (12) sont disposés parallèles l'un à l'autre.

11. Aéronef selon l'une des revendications 1 à 10, **caractérisé par le fait que** l'installation de propulsion (2) présente au moins deux installations de pales d'hélice (3) rotatives respectivement autour d'un axe de rotation (5) et/ou que l'axe de rotation (5) ou les axes de rotation (5) sont disposés dans un plan pour l'essentiel horizontal.

12. Aéronef selon l'une des revendications 1 à 11, **caractérisé par le fait que** l'axe de rotation (5) ou les axes de rotation (5) sont disposés parallèles à un axe longitudinal du fuselage (1) s'étendant en direction de vol vers l'avant.

13. Aéronef selon l'une des revendications 1 à 12, **caractérisé par le fait que** les cylindres (15) sont mutuellement décalés les uns par rapport aux autres et/ou qu'au moins un cylindre (15) est disposé sur chaque côté longitudinal du fuselage (1) et/ou qu'au moins deux cylindres (15) sont rotatifs en sens inverse.

14. Aéronef selon l'une des revendications 1 à 13, **caractérisé par le fait qu'**au moins deux cylindres (15) sont disposés sur chaque côté longitudinal du fuselage (1) et que les axes de rotation (5) de cylindres (15) opposés l'un à l'autre sont alignés et/ou que chaque cylindre (15) peut être commandé séparément et/ou que plusieurs cylindres (15) peuvent être commandés ensemble dans le même sens.

15. Aéronef selon l'une des revendications 1 à 14, **caractérisé par le fait que** les pales d'hélice (3) sont montées pivotantes, à leur extrémité écartée de l'élément de propulsion (7), sur ou dans un élément de guidage (16) au moyen de respectivement un axe de pivotement (4), l'élément de guidage (16) étant de préférence conformé pour l'essentiel comme l'élément de propulsion (7) - de préférence en forme de disque -.

16. Aéronef selon la revendication 15, **caractérisé par le fait que** l'élément de guidage (16) est disposé pouvant tourner avec l'élément de propulsion (7) et/ou que l'élément de guidage (16) et l'élément de propulsion (7) sont accouplés au moyen d'un axe ou de l'axe de rotation (5) et/ou qu'un rotor de guidage (17) constitué de plusieurs pales de rotor (18) est adjoint à l'élément de guidage (16).

17. Aéronef selon la revendication 16, **caractérisé par le fait que** les pales de rotor (18) sont articulées sur l'élément de guidage (16) et/ou que le rotor de guidage (17) est entraîné par l'intermédiaire d'une tringlerie s'étendant à travers l'axe de rotation (5).

18. Aéronef selon l'une des revendications 1 à 17, **caractérisé par le fait que** des ensembles, disposés côte à côte ou les uns derrière les autres, de pales d'hélice (3) ou de cylindres (15) sont disposés quasiment réfléchis dans un miroir.

19. Aéronef selon l'une des revendications 6 à 18, **caractérisé par le fait que**, aux deux extrémités des pales d'hélice (3), est disposé un élément de commande (12) pouvant être actionné indépendamment de l'autre élément de commande (12) respectif.

20. Aéronef selon l'une des revendications 1 à 19, **caractérisé par le fait qu'**au moins une turbine de propulsion est disposée dans le fuselage (1) de l'aéronef, les gaz d'échappement de la turbine de propulsion étant de préférence guidés latéralement hors du fuselage (1) directement sur le cylindre de rotor (15) ou au-dessus du cylindre de rotor (15).

21. Aéronef selon l'une des revendications 1 à 20, **caractérisé par le fait que** deux cylindres de rotor (15) ou plus disposés les uns derrière les autres sont disposés entre les propulseurs réglables ou les propulseurs (21, 22) et/ou qu'au moins une surface portante auxiliaire ou une surface portante (24) est disposée sur le fuselage (1), sur laquelle ou lesquelles le cylindre de rotor (15) ou les cylindres de rotor (15) sont disposés ou suspendus.
